# EUROPEAN PATENT APPLICATION

(11) **EP 4 710 756 A1**
(43) Date of publication of application: **18.03.2026**
(21) Application number: 25202008.6
(22) Date of filing: 12.09.2025
(51) Int. Cl.: A01K 7/02

(54) **PET WATERING APPARATUS**

(30) Priority: 15.09.2024 US 202463694869 P
(71) Applicant: Clever Trix LLC, San Luis Obispo California 93401 (US)
(72) Inventor: Robinson, Gregory John, San Luis Obispo, California 93401 (US)
(74) Representative: Rüger Abel Patentanwälte PartGmbB

(57) **Abstract**

Methods and systems for a leak stop valve system for a pet water bowl system (100, 200, 300, 400, 700, 800, 900, 1000, 1300, 1400, 1500, 1600, 1800, 1900, 2000, 2100, 2300) are described. The leak stop valve system includes a housing (105, 210, 305, 415, 1100, 1405, 2105, 2310) and a valve assembly (215, 435, 500, 600, 700, 730, 1440, 2110, 2200) within the housing configured to be connected to a water supply line (110, 1620) from outside the housing. A valve mechanism is present within the valve assembly, the valve mechanism being operable to detect water within the housing and to shut off the water supply when water is detected within the housing, wherein the valve mechanism is configured to detect water within the housing in excess of a prescribed excess amount above a desired water level. Additionally, a mechanical indicator mechanism is configured to activate in response to the valve mechanism detecting water within the housing to indicate when the valve mechanism is in a closed position, wherein the mechanical indicator (635, 750, 1505, 1810, 2210, 2305) moves from a position within the housing to a position at least partially protruding from the housing when activated.

## Description

### CROSS-REFERENCE TO RELATED APPLICATION(S)

This application claims the benefit of U.S. Provisional Application No. 63/694,869 filed September 15, 2024, for PET WATERING APPARATUS WITH SIPHON WATER FEED, which is incorporated herein by reference in its entirety.

### TECHNICAL FIELD

The present disclosure relates generally to a water bowl, and more specifically to a pet water bowl. Even more specifically, the present disclosure relates to a pet water bowl that may be automatically replenished.

### BACKGROUND

Various methods and systems are known in the art for providing water to pets. However, most of these systems require manual replenishment of water for the pets. In some cases, pets may be provided with a bowl of water by an owner. In some cases, a system may supply a water bowl from a reservoir by gravity. In some cases, a water device may require replenishing of water by hand (e.g., hand of the pet owner). As such, these systems may be inconvenient as the owner needs to continually monitor water levels and manually replenish the water. Moreover, the pet may run out of water in case the owner fails to monitor depleted water.

### SUMMARY

Several embodiments of the disclosure advantageously address the needs above as well as other needs by providing a pet water bowl that may be automatically replenished.

The present disclosure describes systems and methods for a pet watering apparatus with siphon water feed. Embodiments of the present disclosure are configured to prevent monitoring and replenishing water in a pet water bowl. In some cases, the pet water bowl may be supplied with water from a secondary source, such as a toilet tank. According to an embodiment, the pet water bowl may be supplied by water from a toilet tank, where the toilet tank is automatically replenished with water via a siphon. Accordingly, by automatically replenishing the tank with water, embodiments of the present disclosure are able to provide a continuous supply of water for the pet. Additionally, by performing the automatic replenishment, embodiments are able to minimize monitoring and manually replenishing of the water source by the pet owner.

In one embodiment, the disclosure can be characterized as an apparatus and system for pet water bowl. One or more aspects of the apparatus and system include a housing; a valve assembly within the housing configured to be connected to a water supply line from outside the housing; a valve mechanism within the valve assembly, the valve mechanism being operable to detect water within the housing and to shut off the water supply when water is detected within the housing; and a mechanical indicator mechanism configured to activate in response to the valve mechanism detecting water within the housing to indicate when the valve mechanism is in a closed position, wherein the mechanical indicator moves from a position within the housing to a position at least partially protruding from the housing when activated.

In another embodiment, the disclosure can be characterized as an apparatus and system for pet water bowl. One or more aspects of the apparatus and system include a housing wherein the housing comprises a desired water level; a valve assembly within the housing configured to be connected to a water supply line from outside the housing; valving mechanism within the valve assembly, the valve mechanism being operable to detect water within the housing and to shut off the water supply when water is detected within the housing; and the valve mechanism wherein the valve mechanism is configured to detect water within the housing in excess of a prescribed excess amount above the desired water level.

In a further embodiment, the disclosure may be characterized as an apparatus and system for pet water bowl. One or more aspects of the apparatus and system include a housing; a valve assembly configured to be connected to a water supply line from outside the housing; a ball valve mechanism within the valve assembly, the ball valve mechanism being manually operable to control flow of water; and an access mechanism configured to lock the housing in a closed position when the ball valve mechanism is in an open position allowing flow of water, and to unlock the housing and allow user access to components within the housing when the ball valve mechanism is in a closed position shutting off the flow of water.

In yet another embodiment, the disclosure may be characterized as an apparatus and system for pet water bowl. One or more aspects of the apparatus and system include a valve assembly configured to be connected to a water supply line and a check valve mechanism within the valve assembly, the check valve mechanism being installed in a direction to overcome a prescribed pressure and allow flow from the water supply line to pass through the check valve mechanism when a suction is applied to the check valve mechanism, wherein the prescribed pressure is above a siphon pressure of the water supply line, wherein the check valve mechanism closes when the suction is not applied.

In another embodiment, the disclosure can be characterized as an apparatus and system for pet water bowl. One or more aspects of the apparatus and system include a housing configured to be connected to a water supply line; a float valve mechanism within the housing, the float valve mechanism being operable to control flow of water based on a water level; and a sealing mechanism configured to lift the float valve when the housing is opened, wherein the float valve mechanism closes when the housing is opened.

In a further embodiment, the disclosure may be characterized as an apparatus and system for pet water bowl. One or more aspects of the apparatus and system include an outer bowl for holding water, wherein a water level in the outer bowl is regulated by a float valve and an inner bowl configured to nest within the outer bowl, the inner bowl comprising a check valve to prevent back flow of contaminants from the inner bowl into the outer bowl.

In yet another embodiment, the disclosure may be characterized as an apparatus and system for pet water bowl. One or more aspects of the apparatus and system include a first channel in the pet water bowl system, wherein the first channel is on a back of the pet water bowl system housing, wherein the first channel leads from a first side of the housing to an entry point on the back of the pet water bowl system housing; a second channel in the pet water bowl system, wherein the second channel is on the back of the pet water bowl system housing, wherein the first channel leads from a second side of the housing to an entry point on the back of the pet water bowl system housing; and a rotatable fitting coupled to the pet water bowl housing, wherein the rotatable fitting is configured to align with the first channel and the second channel depending on where the rotatable fitting is rotated, wherein the housing is configured to be connected to a water supply line via the rotatable fitting, wherein the first channel and the second channel are configured to contain the water supply line depending on where the rotatable fitting is rotated.

In one embodiment, the disclosure may be characterized as a method and apparatus for pet water bowl. One or more aspects of the method and apparatus include providing a housing; connecting a valve assembly within the housing to a water supply line from outside the housing; operating a valve mechanism within the valve assembly to detect water within the housing and shut off the water supply when water is detected within the housing; and activating a mechanical indicator mechanism in response to the valve mechanism detecting water within the housing to indicate when the valve mechanism is in a closed position, wherein the mechanical indicator moves from a position within the housing to a position at least partially protruding from the housing when activated.

In another embodiment, the disclosure may be characterized as a method and apparatus for pet water bowl. One or more aspects of the method and apparatus include providing a housing wherein the housing comprises a desired water level; connecting a valve assembly within the housing to a water supply line from outside the housing; operating a valve mechanism within the valve assembly to detect water within the housing and shut off the water supply when water is detected within the housing; and configuring the valve mechanism to detect water within the housing in excess of a prescribed excess amount above the desired water level.

In a further embodiment, the disclosure may be characterized as a method and apparatus for pet water bowl. One or more aspects of the method and apparatus include providing a housing; connecting a valve assembly within the housing to a water supply line from outside the housing; operating a ball valve mechanism within the valve assembly to manually control the flow of water; and locking the housing in a closed position when the ball valve mechanism is in an open position allowing flow of water, and unlocking the housing to allow user access to components within the housing when the ball valve mechanism is in a closed position shutting off the flow of water.

In yet another embodiment, the disclosure may be characterized as a method and apparatus for pet water bowl. One or more aspects of the method and apparatus include providing a valve assembly configured to be connected to a water supply line; operating a check valve mechanism within the valve assembly to overcome a prescribed pressure and allow flow from the water supply line to pass through the check valve mechanism when a suction is applied to the check valve mechanism; and closing the check valve mechanism when the suction is not applied.

In another embodiment, the disclosure may be characterized as a method and apparatus for pet water bowl. One or more aspects of the method and apparatus include providing a housing configured to be connected to a water supply line; operating a float valve mechanism within the housing to control the flow of water based on a water level; and lifting the float valve using a sealing mechanism when the housing is opened, wherein the float valve mechanism closes when the housing is opened.

In yet another embodiment, the disclosure may be characterized as a method and apparatus for pet water bowl. One or more aspects of the method and apparatus include providing an outer bowl for holding water, wherein a water level in the outer bowl is regulated by a float valve and nesting an inner bowl within the outer bowl, wherein the inner bowl comprises a check valve to prevent backflow of contaminants from the inner bowl into the outer bowl.

In a further embodiment, the disclosure may be characterized as a method and apparatus for pet water bowl. One or more aspects of the method and apparatus include providing a housing with a first channel and a second channel, wherein the first channel is on a back of the pet water bowl system housing and leads from a first side of the housing to an entry point on the back of the pet water bowl system housing, and the second channel is on the back of the pet water bowl system housing and leads from a second side of the housing to an entry point on the back of the pet water bowl system housing; coupling a rotatable fitting to the pet water bowl housing, wherein the rotatable fitting is configured to align with the first channel and the second channel depending on where the rotatable fitting is rotated; and connecting the housing to a water supply line via the rotatable fitting, wherein the first channel and the second channel are configured to contain the water supply line depending on where the rotatable fitting is rotated.

In another embodiment, the disclosure may be characterized as a method and apparatus for pet water bowl. One or more aspects of the method and apparatus include providing a water supply tubing connected to a water source, wherein the water supply tubing comprises a submerged end at the water supply that is lower than a central portion, and supply end coupled to the pet water bowl system that is lower than the submerged end; using a syringe to create a partial vacuum, comprising coupling the syringe to a check valve within the pet water bowl system, and overcoming a negative pressure sufficient to open the check valve within the pet water bowl system and apply the negative pressure to the water supply tubing; drawing water from the water source through the check valve and into the water supply tubing to establish a siphon; and using the syringe to release the partial vacuum, comprising removing the syringe from the check valve within the pet water bowl system, and releasing the negative pressure thereby closing the check valve within the pet water bowl system while maintaining the siphon.

Additional combinations and/or permutations of the above examples are envisioned as being within the scope of the present disclosure. It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

### BRIEF DESCRIPTION OF DRAWINGS

The above and other aspects, features and advantages of several embodiments of the present disclosure will be more apparent from the following more particular description thereof, presented in conjunction with the following drawings.
FIG. 1 shows an example of a pet water bowl system according to aspects of the present disclosure.
FIG. 2 shows an example of a pet water bowl system overview according to aspects of the present disclosure.
FIG. 3 shows an example of a pet water bowl installment according to aspects of the present disclosure.
FIG. 4 shows an example of an exploded view of pet water bowl system according to aspects of the present disclosure.
FIG. 5 shows an example of a side view and a top view of valve assembly according to aspects of the present disclosure.
FIG. 6 shows an example of a detailed view of the valve assembly according to aspects of the present disclosure.
FIG. 7 shows an example of a pet water bowl system according to aspects of the present disclosure.
FIG. 8 shows an example of an overview of a pet water bowl system according to aspects of the present disclosure.
FIG. 9 shows an example of a pet water bowl system according to aspects of the present disclosure.
FIG. 10 shows an example of a pet water bowl system according to aspects of the present disclosure.
FIG. 11 shows an example of a tube channel in wall mount according to aspects of the present disclosure.
FIG. 12 shows an example of a plumbing brace according to aspects of the present disclosure.
FIG. 13 shows an example of a plumbing brace and a bowl reservoir according to aspects of the present disclosure.
FIG. 14 shows an example of a pet water bowl system according to aspects of the present disclosure.
FIG. 15 shows an example of a top view of a pet water bowl system according to aspects of the present disclosure.
FIG. 16 shows an example of a pet water bowl system according to aspects of the present disclosure.
FIG. 17 shows an example of a reverse osmosis (RO) flow bend according to aspects of the present disclosure.
FIG. 18 shows an example of a pet water bowl system according to aspects of the present disclosure.
FIG. 19 shows an example of a top view of pet water bowl system according to aspects of the present disclosure.
FIG. 20 shows an example of a pivot pet water bowl system according to aspects of the present disclosure.
FIG. 21 shows an example of a top frontal view of pet water bowl system according to aspects of the present disclosure.
FIG. 22 shows an example of a mechanical indicator according to aspects of the present disclosure.
FIG. 23 shows an example of a system with a mechanical indicator according to aspects of the present disclosure.
FIGs. 24 through 31 show examples of methods for operating the pet water bowl according to aspects of the present disclosure.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present disclosure. Also, common but well-understood elements that are useful or necessary in a commercially feasible embodiment are often not depicted in order to facilitate a less obstructed view of these various embodiments of the present disclosure.

### DETAILED DESCRIPTION

The above and other aspects, features and advantages of several embodiments of the present disclosure will be more apparent from the following more particular description thereof, presented in conjunction with the following drawings.

The following description is not to be taken in a limiting sense, but is made merely for the purpose of describing the general principles of exemplary embodiments. The scope of the invention should be determined with reference to the claims.

Various methods and apparatuses existing in the art for providing water to pets require manual replenishment of water. In some cases, pets may be provided with a bowl of water by an owner. In some cases, an existing system may supply a water bowl from a reservoir by gravity. In some cases, an existing water device may require replenishing of water by hand (e.g., of the pet owner). As such, these systems may be inconvenient as the owner needs to continually monitor water levels and manually replenish the water. Moreover, the pet may run out of water in case the owner fails to monitor depleted water.

In some examples, an existing pet watering device may be an indoor unit that may be gravity fed. In some cases, such a device may rely on vacuum created by a closed water reservoir, for example, similar to a 5 gallon water cooler. In such cases, for example, replacing a water cooler bottle may cause spilled water while trying to replace the bottle. Existing pet watering systems do not include a wall mounted indoor units that fill at a convenient height.

An existing pet watering device may be an outdoor pet watering bowl that may be used for livestock. In some cases, such a device may be designed to connect to a garden hose that remains under pressure. In case a single float valve fails and a garden hose fails, sharp canine teeth may easily hasten the pressure loss process. In some examples, in case the garden hose fails at night, a significant loss of water may occur.

An existing pet water system may be an indoor pet water fountain. In some cases, such a device provides flowing water, which a pet may prefer. However, such indoor pet water fountains may not be automatically refilled. In some cases, such a device includes an internal filter and water pump of water flow. Such systems may include a sensor or float to prevent the pump from damage (e.g., burning). However, such systems may require to be plugged in to alternating current (AC) power source, the filters or plumbing may foul, and they may have parts that may be difficult to clean. Moreover, such systems may not have an antimicrobial property, resulting in contamination of the water for the pet.

By contrast, embodiments of the present disclosure are configured to prevent monitoring and replenishing water in a pet water bowl. In some cases, the pet water bowl of the present disclosure may be automatically supplied with water from a secondary source, such as a toilet tank. According to an embodiment, the pet water bowl may be supplied by water from a toilet tank, where the toilet tank is automatically replenished with water. Accordingly, by automatically replenishing the pet water bowl with water, embodiments of the present disclosure are able to provide a continuous supply of water for the pet. Additionally, by performing the automatic replenishment, embodiments are able to minimize monitoring and manually replenishing of the water source by the pet owner.

An embodiment of the present disclosure is configured to miniaturize the pet water bowl. For example, the pet water bowl may be maximally miniaturized (e.g., miniaturized to the greatest extent possible). In some examples, a bathroom may have a pedestal sink or a return wall next to the toilet that provides for high clearance. In some examples, the miniaturization of the pet water bowl enhances desirability in a hallway or a tight space. In some examples, the miniaturization of the pet water bowl increases a "cute factor" while still remaining useful for large breed dogs. In some cases, the miniaturization of the pet water bowl prevents a trip hazard and spill by ensuring the water bowl is placed above the ground and away from human feet.

In some cases, the pet water bowl may include a plumbing pipe and fittings that may be assembled into the wall mount assembly and shipped to the customer, where the assembly is ready to be installed by the customer. In some cases, the customer may select a mounting location and obtain a supply pipe of appropriate length to reach the bottom of the toilet reservoir. A filter head may be installed at an end of the pipe to filter sediment and weight down the pipe end. In some cases, the pipe may enter near the wall from the bottom. By entering the pipe near the wall from the bottom, embodiments ensure the piping is neat and tidy while reducing a need for a fitting that may potentially result in leakage and positions the piping away from sharp teeth (e.g., of the pet). The pipe may be secured to the wall with the provided adhesive pipe fasteners. The wall mount assembly may be designed to work with a variant of the pet water bowl.

The present disclosure describes systems and methods associated with a pet product, such as a pet water bowl designed for indoor use. For example, the pet water bowl may be designed in three different variants, where each variant may be paired with at least one of the differently shaped bowls that attach to the wall mount assembly. In some examples, each of the three variants may use the same wall mount assembly that comprises the plumbing features. In some examples, a minor change may be incorporated in the plumbing assembly to accommodate the different variants. According to an embodiment, a variant may not use an intervention from pet owners for refilling. According to an embodiment, a variant may be refilled easily. For example, a pet water bowl may appear as a miniature toilet due to high online attention. For example, a pet water bowl may have a slim profile and may be approximately rectangular in shape.

According to an embodiment of the present disclosure, the pet water bowl includes a mechanical setup. By using the said mechanical system, embodiments of the present disclosure prevent use of a battery or an electrical outlet for the pet water bowl system. For example, the first variant and the second variant of the pet water bowl may be installed by the user (e.g., without a need to hire a plumber).

According to an embodiment of the present disclosure, the pet water bowl includes a mechanical indicator. In some cases, the mechanical indicator may be designed to prevent leaks in RO and aquarium systems. Since the RO pipe extends continuously from the toilet reservoir directly to the mechanical indicator of the pet water bowl, a leak inside the unit may cut the flow (e.g., supply) of water. In some cases, a red plastic rod may indicate when the mechanical indicator may be activated. For example, the mechanical indicator may be utilized in the first variant, the second variant, and the third variant.

An embodiment of the present disclosure includes a float valve that may replenish the pet water bowl while a pet is drinking. By replenishing the pet water bowl while the pet is drinking, embodiments of the present disclosure are able to incorporate a preference of pets (e.g., dogs and cats) to drink from a water source that flows (e.g., a pet may prefer drinking from garden hoses or running sinks, etc.). In some cases, the float valve may function appropriately in case the user removes the drinking bowl, does not replace the bowl, and/or forgets to close the ball valve. In some examples, the float valve may be the smallest float valve available commercially. In some examples, the float valve of the pet water bowl may be connected directly into the bottom of the ball valve. By connecting the float valve at the bottom of the ball valve, embodiments of the present disclosure are able to save space and assist in miniaturization of the pet water bowl.

According to an embodiment, the pet water bowl system includes two chambers separated by a check valve (e.g., an umbrella valve). In some cases, the check valve prevents backflow of contaminants (e.g., large dogs may be messy drinkers) from the bowl into the large reservoir. By preventing the backflow of contaminants, embodiments of the present disclosure are able to inhibit saliva and biofilm accumulation in the back chamber or on the float valve. Accordingly, the frequency of cleaning may be reduced. Additionally, since the rear chamber is enclosed, the darkness in the chamber may inhibit algae growth in the rear chamber in case the device is mounted in direct sunlight. In some cases, an antimicrobial additive may be added to the injection molded plastic and the check valve.

Reference throughout this specification to "one embodiment," "an embodiment," or similar language means that a particular feature, structure, or characteristic described in connection with the embodiment is included in at least one embodiment of the present description. Thus, appearances of the phrases "in one embodiment," "in an embodiment," and similar language throughout this specification may, but do not necessarily, all refer to the same embodiment.

Furthermore, the described features, structures, or characteristics of the description may be combined in any suitable manner in one or more embodiments. In the following description, numerous specific details are provided to provide a thorough understanding of embodiments of the description. One skilled in the relevant art will recognize, however, that the teachings of the present description can be practiced without one or more of the specific details, or with other methods, components, materials, and so forth. In other instances, well-known structures, materials, or operations are not shown or described in detail to avoid obscuring aspects of the description.

### Pet Water Bowl System

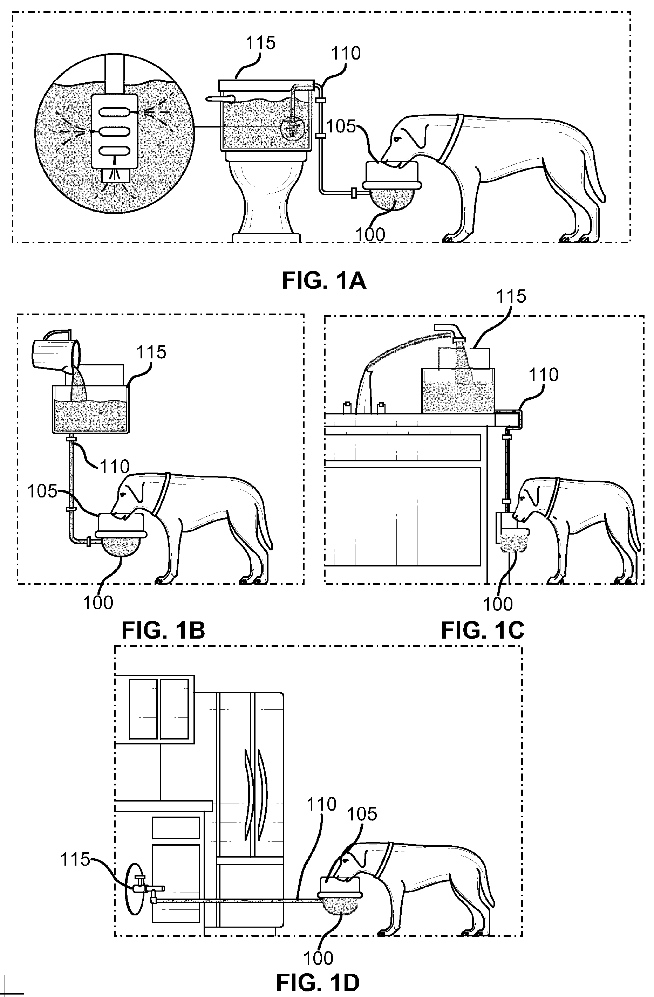

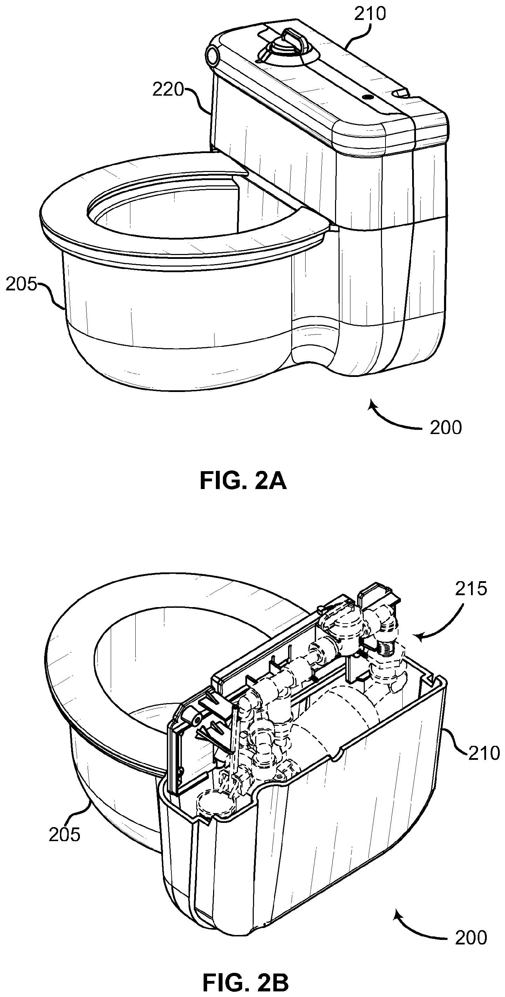

FIG. 1 shows an example of a pet water bowl system 100 according to aspects of the present disclosure. Pet water bowl system 100 is an example of, or includes aspects of, the corresponding element described with reference to FIGs. 2-4, 7-11, 14-17, and 19-23. In one aspect, pet water bowl system 100 includes housing 105, water supply line 110, and water source 115.

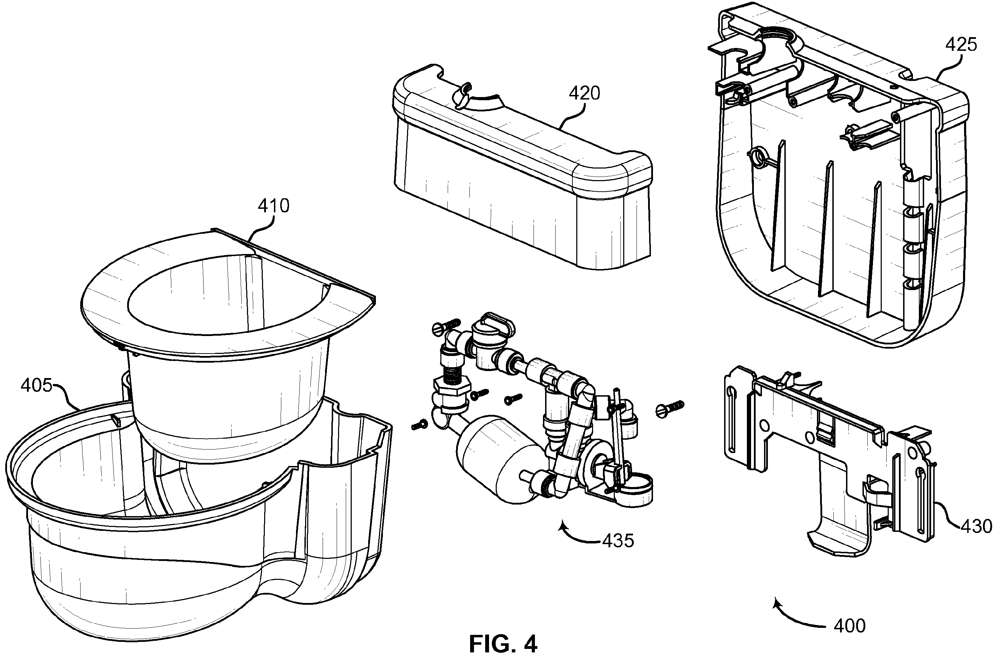

Housing 105 is configured to enclose a valve assembly (such as the valve assembly as described in at least FIGs. 4-6). The housing 105 supports water supply line 110 that may be adapted to feed valve assembly with water from water source 115. For example, water supply line 110 may conduct water from water source 115 to the valve assembly under pressure, or by siphon. In some examples, as indicated in FIG. 1, water supply line 110 may conduct water from water source 115 (e.g., a toilet tank) to the valve assembly by siphon.

As shown in FIG. 1A, the pet water bowl system 100 may be designed for indoor use and may automatically refill the bowl from a continuous water source. For example, the pet water bowl system 100 is refilled from the water source 115. In some examples, the pet water bowl system 100 uses water supply line 110 (e.g., a siphon) from a toilet tank reservoir and small gauge piping for refilling purposes. In some cases, the supply line 110 may be installed on either side of a human toilet (as indicated in FIG. 1A), via an interior wall, or via a basement or crawlspace in case an installation in an adjoining room or hallway is preferred by a user.

FIG. 1B shows a variant of the pet water bowl system. As shown in FIG. 1B, the pet water bowl system may be refilled using a one-gallon reserve tank with a port on the bottom. For example, the arrangement may be a modified version of a pull chain toilet. In some cases, the additional reserve tank may be located on a wall above the water bowl system, as indicated in FIG. 1C. In some cases, the additional reserve tank may gravity-feed to a float valve in the valve assembly. In some cases, the reserve tank may be refilled with a water pitcher at a height appropriate for the pet owner.

An embodiment of the present disclosure includes another variant of the pet water bowl system. As shown in FIG. 1D, the variant may be connected directly to a reverse osmosis filter due to utilization of same plumbing fittings and pipe as the filter. In some cases, the pet water bowl system in FIG. 1D may be directly connected to an ice maker line of a refrigerator. By providing the ability to connect the pet water bowl system to an existing apparatus, embodiments of the present disclosure are able to significantly expand the number of installation options by enabling connectivity to a cold-water source (such as a sink or dishwasher).

According to some aspects, housing 105 is configured to be connected to a water supply line 110. According to some aspects, the housing 105 is configured to be connected to a water supply line 110 via a rotatable fitting, where a first channel and a second channel are configured to contain the water supply line 110 depending on where the rotatable fitting is rotated.

According to some aspects, the housing 105 indicates a desired water level. In some examples, housing 105 comprises a float valve mechanism that may be operable to control flow of water based on a water level.

According to some aspects, housing 105 includes a first channel and a second channel, where the first channel is on a back of the pet water bowl system housing 105 and leads from a first side of the housing 105 to an entry point on the back of the pet water bowl system 100, and the second channel is on the back of the pet water bowl system 100 and leads from a second side of the housing 105 to an entry point on the back of the pet water bowl system housing 105. Housing 105 is an example of, or includes aspects of, the corresponding element described with reference to FIGs. 2-5, 11, 14, 18, 19, 21, and 23.

In some aspects, the water supply line 110 includes a flexible tube. In some aspects, the water supply line 110 is configured to siphon water from the water source 115 to the valve assembly.

According to some aspects, water supply line 110 comprises a flexible tube coupled to the float valve. In some examples, the valve assembly comprises the float valve, wherein the water supply is a pressurized water supply. In some examples, the valve assembly comprises the float valve, wherein the water supply is a gravity-fed water supply.

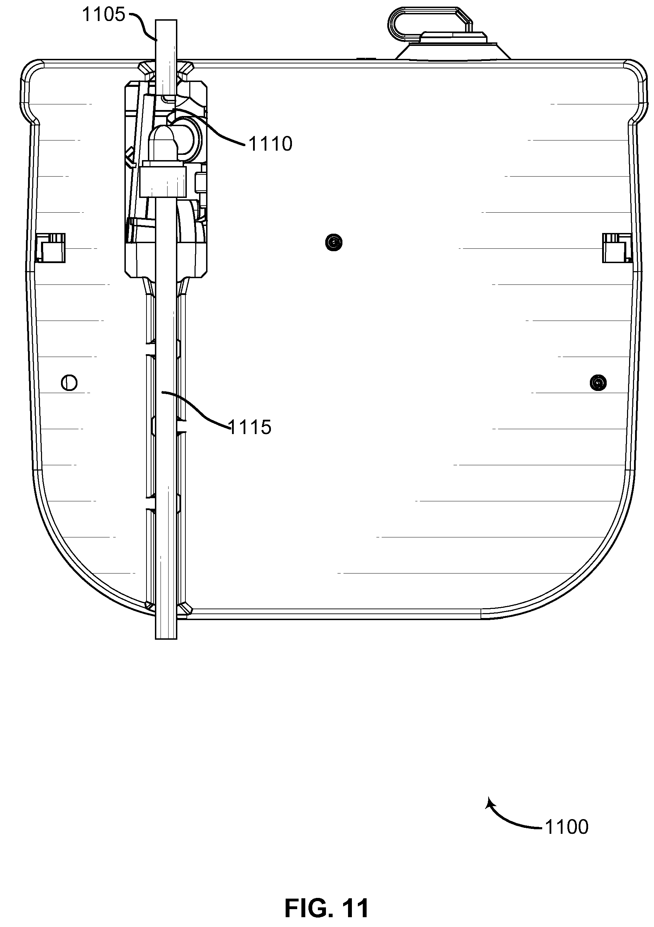

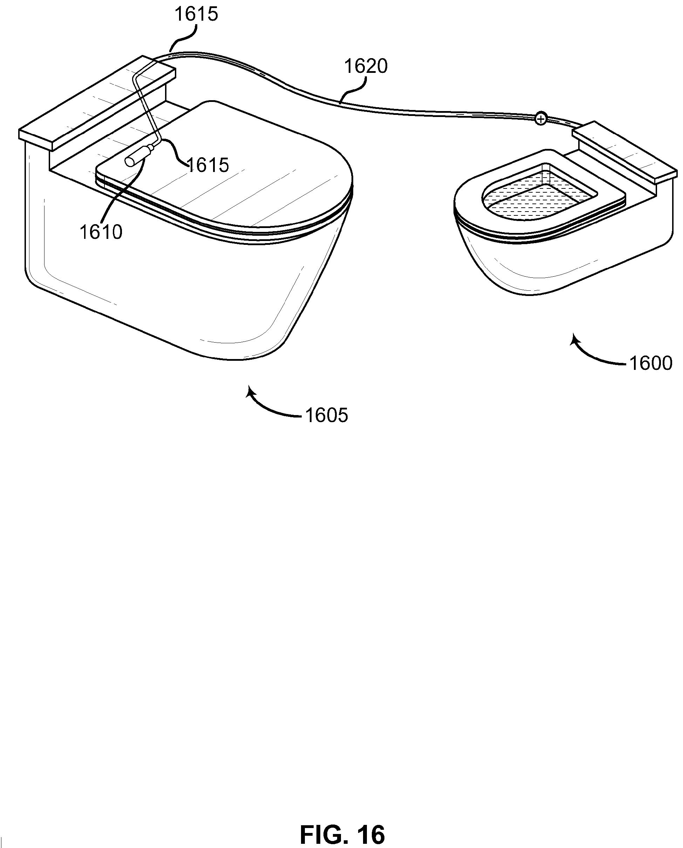

In some aspects, the water supply line 110 is configured to siphon water from the water tank to the rotatable fitting. In some aspects, the water supply is a pressurized water supply. In some aspects, the water supply is a gravity-fed water supply. Water supply line 110 is an example of, or includes aspects of, the corresponding element described with reference to FIGs. 11 and 16.

FIG. 2 shows an example of a pet water bowl system 200 overview according to aspects of the present disclosure. Pet water bowl system 200 is an example of, or includes aspects of, the corresponding element described with reference to FIGs. 1, 3, 4, 7-10, 13-16, and 18-23. In one aspect, pet water bowl system 200 includes outer bowl 205, housing 210, valve assembly 215, and tank front 220.

FIG. 2A shows the pet water bowl system 200 in an assembled state according to an embodiment of the present disclosure. In some cases, as shown in FIG. 2A, the pet water bowl system 200 may depict a representation of a toilet, as pets are known to drink from toilets. Therefore, the pet water bowl system 200 may assume a configuration that represents a miniature toilet for a pet.

FIG. 2B shows another view of the pet water bowl system 200 according to an embodiment of the present disclosure. In some cases, as shown in FIG. 2B, the pet water bowl system 200 includes valve assembly 215 that is within housing 210. For example, housing 210 may be adapted to connect to valve assembly 215. In some cases, housing 210 may suspend valve assembly 215 over the rear end of the pet water bowl system 200.

For example, in some cases, the housing 210 may suspend valve assembly 215 over the rear end of bowl receiving portion (e.g., outer bowl 205). In some examples, housing 210 may be adapted to provide a means for attaching the pet water bowl system 200 to a wall (e.g., a vertical wall). In some examples, housing 210 may be adapted to enclose valve assembly 215 within the pet water bowl system 200.

According to some aspects, outer bowl 205 is configured to hold water, wherein a water level in the outer bowl 205 is regulated by a float valve. Outer bowl 205 is an example of, or includes aspects of, the corresponding element described with reference to FIGs. 4, 13, 19, and 21-23.

According to some aspects, the housing 210 includes a keyway configured to receive a fastener head, where the fastener head extends from a vertical wall. According to some aspects, the housing 210 indicates a desired water level. According to some aspects, housing 210 is configured to be connected to a water supply line. In some examples, housing 210 comprises the float valve mechanism in valve assembly 215 that may be operable to control flow of water based on the water level. Housing 210 is an example of, or includes aspects of, the corresponding element described with reference to FIGs. 1, 3-5, 11, 14, 18, 19, 21, and 23.

According to some aspects, valve assembly 215 is within the housing 210 configured to be connected to a water supply line from outside the housing 210. In some examples, valve assembly 215 implements the valve mechanism that may be operated to detect water within the housing 210 and to shut off the water supply when water is detected within the housing 210. In some examples, valve assembly 215 comprises the ball valve mechanism being manually operable to control flow of water. In some examples, valve assembly 215 receives water via the water supply line, wherein the water supply is a pressurized water supply. In some examples, valve assembly 215 receives water via the water supply line, wherein the water supply is a gravity-fed water supply.

According to some aspects, valve assembly 215, within the housing 210, is configured to be connected to a water supply line from outside the housing 210. In some examples, valve assembly 215 implements the valve mechanism that may be operated to detect water within the housing 210 and to shut off the water supply when water is detected within the housing 210. In some aspects, the valve mechanism is configured to detect water within the housing 210 in excess of a prescribed excess amount above the desired water level.

According to some aspects, valve assembly 215 is configured to be connected to a water supply line from outside the housing 210. In some examples, valve assembly 215 comprises the ball valve mechanism that may be manually operable to control flow of water. In some examples, valve assembly 215 comprises an access mechanism configured to lock the housing 210 in a closed position when the ball valve mechanism is in an open position allowing flow of water, and to unlock the housing 210 and allow user access to components within the housing 210 when the ball valve mechanism is in a closed position shutting off the flow of water.

According to some aspects, valve assembly 215 is configured to be connected to a water supply line. In some examples, valve assembly 215 implements the check valve mechanism that may be installed in a direction to overcome a prescribed pressure and allow flow from the water supply line to pass through the check valve mechanism when a suction is applied to the check valve mechanism, wherein the prescribed pressure is above a siphon pressure of the water supply line, wherein the check valve mechanism closes when the suction is not applied.

According to some aspects, valve assembly 215 comprises a sealing mechanism configured to lift the float valve when the housing 210 is opened, where the float valve mechanism closes when the housing 210 is opened.

According to some aspects, valve assembly 215 may be connected within the housing 210 to a water supply line from outside the housing 210. In some examples, valve assembly 215 operates a valve mechanism within the valve assembly 215 to detect water within the housing 210 and shut off the water supply when water is detected within the housing 210. In some examples, valve assembly 215 activates a mechanical indicator mechanism in response to the valve mechanism detecting water within the housing 210 to indicate when the valve mechanism is in a closed position, where the mechanical indicator moves from a position within the housing 210 to a position at least partially protruding from the housing 210 when activated.

According to some aspects, valve assembly 215 may be connected within the housing 210 to a water supply line from outside the housing 210. In some examples, valve assembly 215 operates a valve mechanism within the valve assembly 215 to detect water within the housing 210 and shut off the water supply when water is detected within the housing 210. In some examples, valve assembly 215 configures the valve mechanism to detect water within the housing 210 in excess of a prescribed excess amount above the desired water level.

According to some aspects, valve assembly 215 may be connected within the housing 210 to a water supply line from outside the housing 210. In some examples, valve assembly 215 operates a ball valve mechanism within the valve assembly 215 to manually control the flow of water. In some examples, valve assembly 215 locks the housing 210 in a closed position when the ball valve mechanism is in an open position allowing flow of water, and unlocking the housing 210 to allow user access to components within the housing 210 when the ball valve mechanism is in a closed position shutting off the flow of water.

According to some aspects, valve assembly 215 may be configured to be connected to a water supply line. In some examples, valve assembly 215 operates a check valve mechanism within the valve assembly 215 to overcome a prescribed pressure and allow flow from the water supply line to pass through the check valve mechanism when a suction is applied to the check valve mechanism. In some examples, valve assembly 215 closes the check valve mechanism when the suction is not applied.

Valve assembly 215 is an example of, or includes aspects of, the corresponding element described with reference to FIGs. 4-7, 14, 21, and 22. Tank front 220 is an example of, or includes aspects of, the corresponding element described with reference to FIGs. 4, 8-10, 14, and 15.

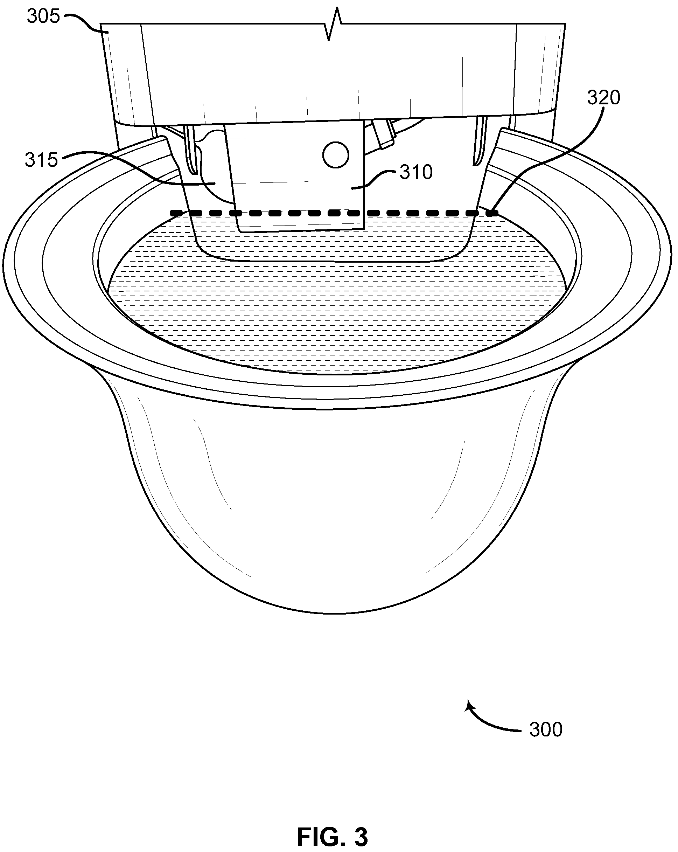

FIG. 3 shows an example of a pet water bowl installment according to aspects of the present disclosure. Pet water bowl system 300 is an example of, or includes aspects of, the corresponding element described with reference to FIGs. 1, 2, 4, 7-10, 13-16, and 18-23. In one aspect, pet water bowl system 300 includes housing 305, float 315, and water level 320.

In one aspect, housing 305 includes float lift 310. For example, the housing 305 may be connected to float lift 310. According to an embodiment of the present disclosure, a position of the float lift 310 indicates a configuration of the float 315. For example, when the float lift 310 is in contact with the water level 320 in an inner bowl (such as the inner bowl described with reference to at least FIG. 4) of the pet water bowl system 300, the float lift 310 is considered as being in 'up' position. Accordingly, the float 315 would be shut off (i.e., the water in the pet water bowl system 300 may be considered sufficient and may not be refilled).

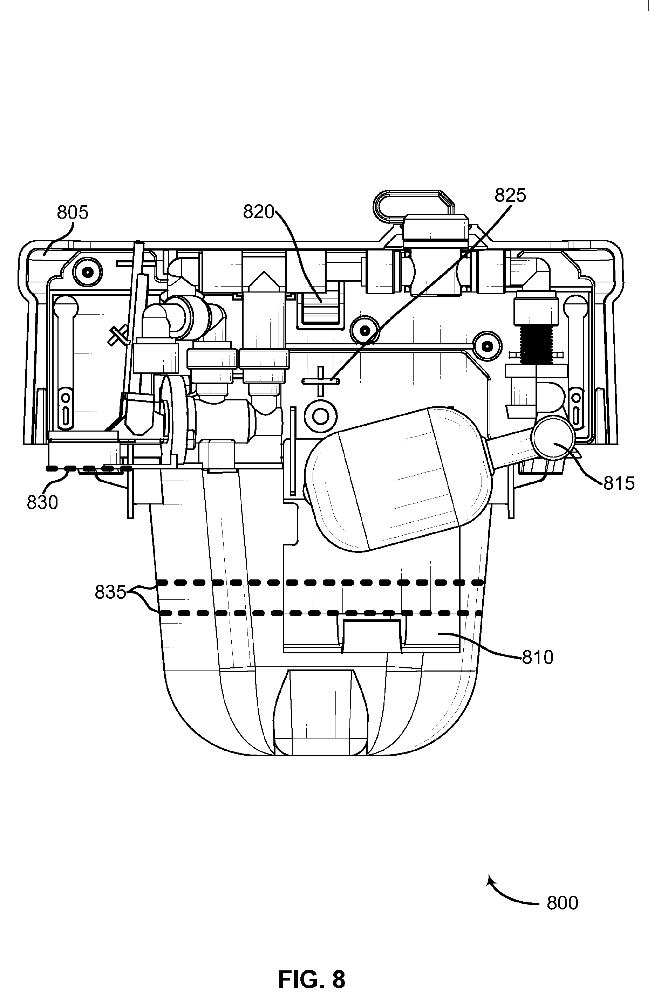

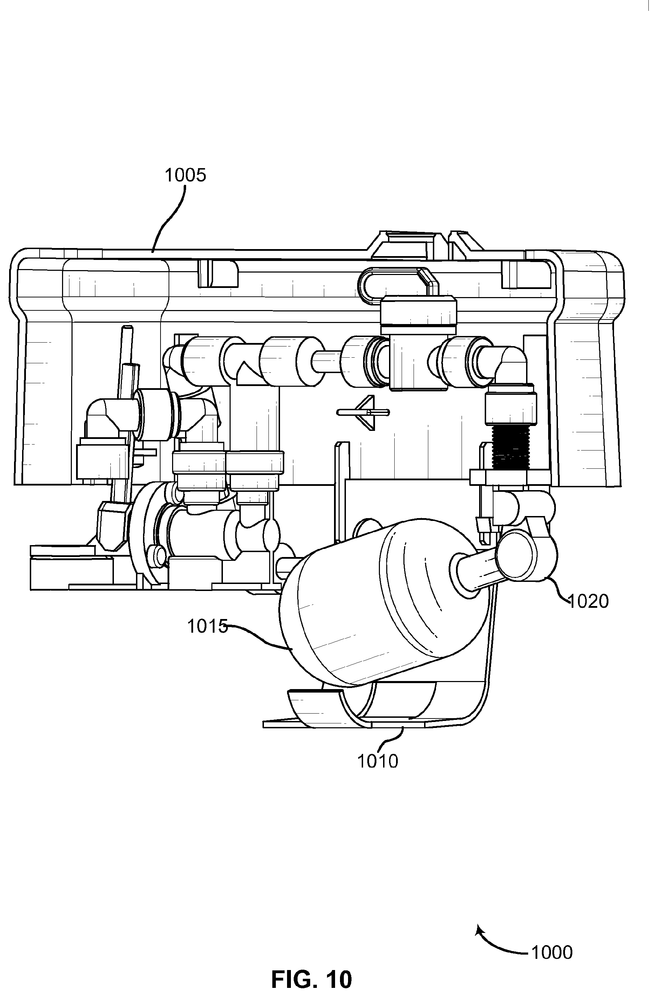

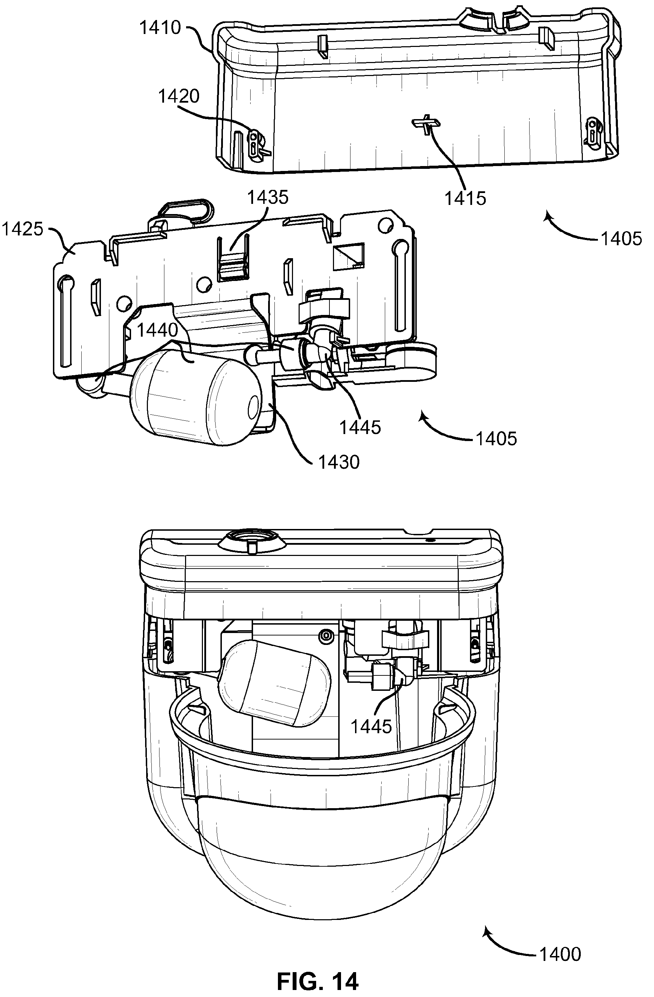

In some aspects, housing 305 may generally refer to any enclosure component(s) of the pet water bowl system (e.g., housing 305 may generally include, or refer to, a lid, a cover, a tank cover, a tank front, a housing cover, an enclosure, a brace, a bracket, etc.). Moreover, as described in the different embodiments described herein, float lift 310 may be attached to housing 305 in various arrangements to function according to the aspects described herein (e.g., float lift 310 may be attached to a tank front as shown in FIG. 10, float lift 310 may be attached to a brace as shown in FIG. 14, etc.). Housing 305 is an example of, or includes aspects of, the corresponding element described with reference to FIGs. 1, 2, 4, 5, 11, 14, 18, 19, 21, and 23. Float lift 310 is an example of, or includes aspects of, the corresponding element described with reference to FIGs. 8-10.

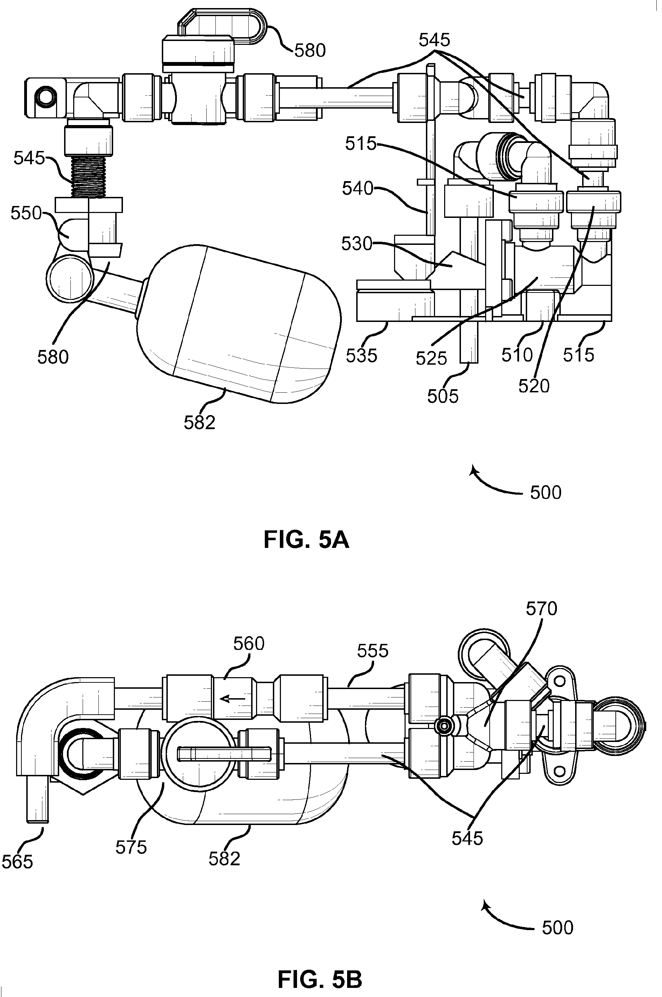

Float 315 is an example of, or includes aspects of, the corresponding element described with reference to FIGs. 5, 7, and 9-10. Water level 320 is an example of, or includes aspects of, the corresponding element described with reference to FIGs. 8, 9, and 20.

FIG. 4 shows an example of an exploded view of pet water bowl system 400 according to aspects of the present disclosure. Pet water bowl system 400 is an example of, or includes aspects of, the corresponding element described with reference to FIGs. 1-3, 7-10, 13-16, and 18-23. In one aspect, pet water bowl system 400 includes outer bowl 405, inner bowl 410, housing 415, and valve assembly 435.

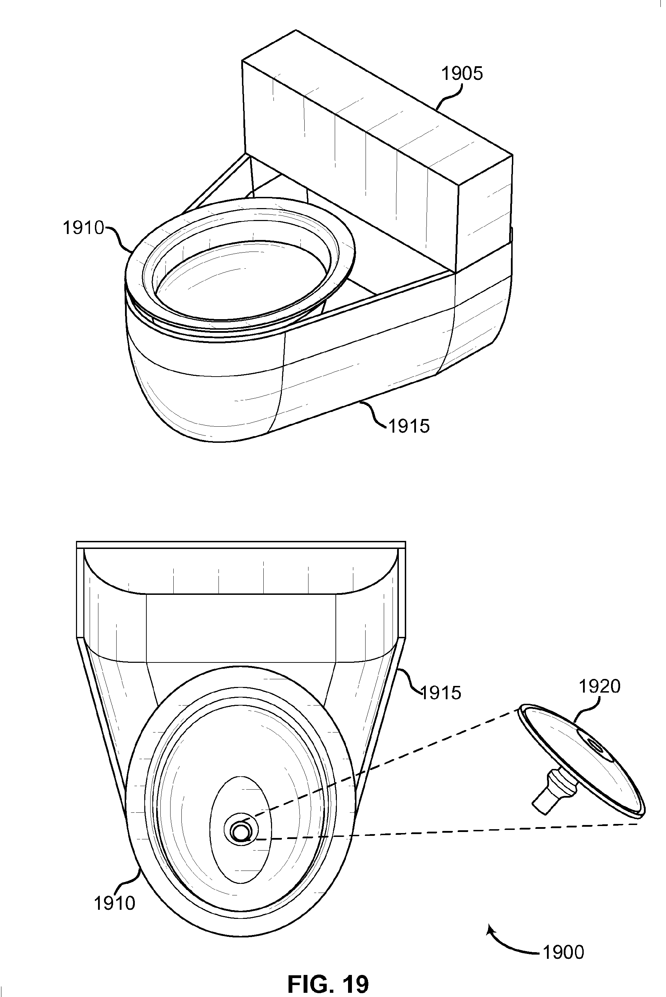

According to some aspects, inner bowl 410 is configured to nest within the outer bowl 405, the inner bowl 410 comprising a check valve (such as check valve described with reference to at least FIG. 19) to prevent back flow of contaminants from the inner bowl 410 into the outer bowl 405. As shown in FIG. 4, outer bowl 405 (e.g., bowl receiving portion) may be adapted to receive inner bowl 410. In some cases, since inner bowl 410 may be nested within outer bowl 405 (i.e., bowl receiving portion), inner bowl 410 may be filled with water by gravity via an opening in the bottom of inner bowl 410 (e.g., an opening in inner bowl as described with reference to FIG. 16). In some cases, the opening may be sealed with a check valve (such as including but not limited to an umbrella valve, a duck-bill valve, a swing valve, a ball check valve, a butterfly valve, a diaphragm check valve), where the valve provides for water to pass via the opening to fill inner bowl 410 from the bottom of the inner bowl 410.

Outer bowl 405 is an example of, or includes aspects of, the corresponding element described with reference to FIGs. 2, 13, 19, and 21-23. Inner bowl 410 is an example of, or includes aspects of, the corresponding element described with reference to FIGs. 19-22.

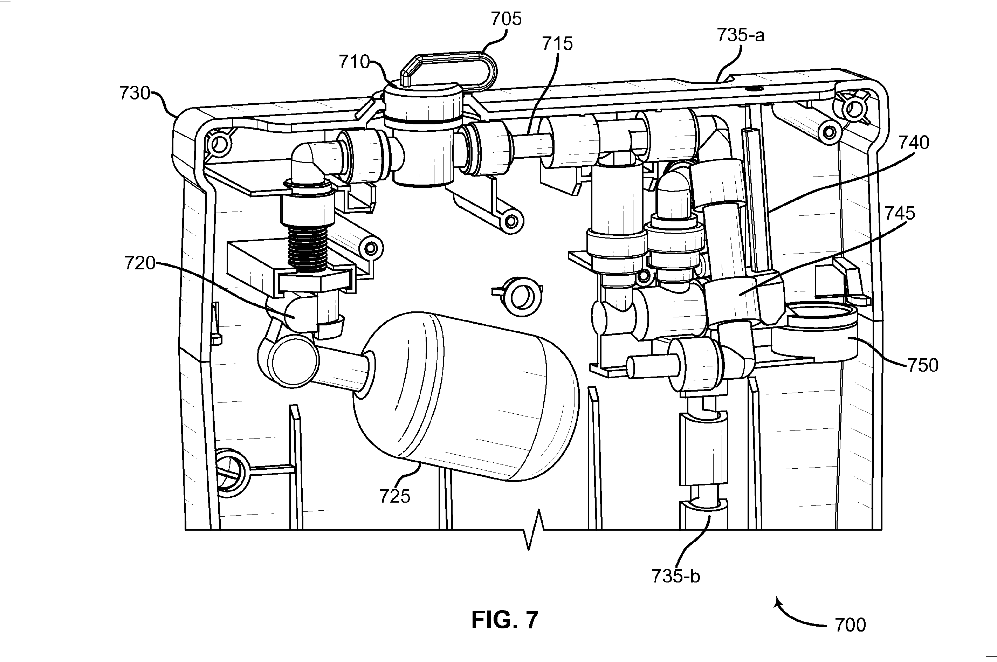

In one aspect, housing 415 includes tank front 420, wall mount 425, and plumbing brace 430. In some cases, housing 415 may be adapted to connect to valve assembly 435. In some cases, the housing 415 may suspend valve assembly 435 over the rear end of bowl receiving portion (e.g., outer bowl 405). For example, housing 415 may be adapted to provide a means for attaching the pet water bowl system 400 to a wall (such as a vertical wall) via wall mount 425 (as described in FIG. 7). In some examples, housing 415 may be adapted to enclose valve assembly 435 within the pet water bowl system 400.

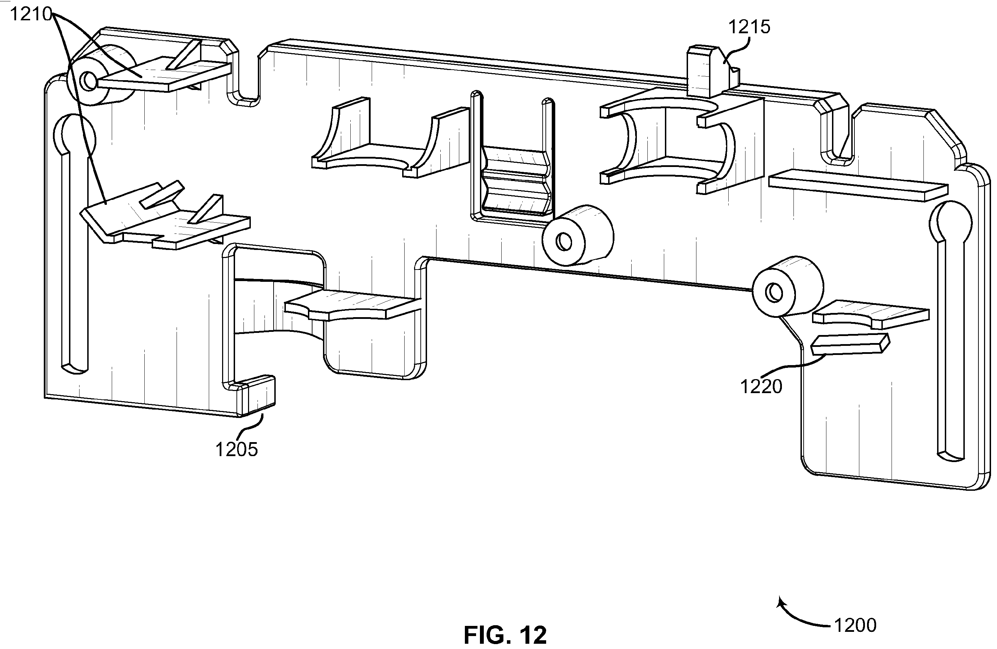

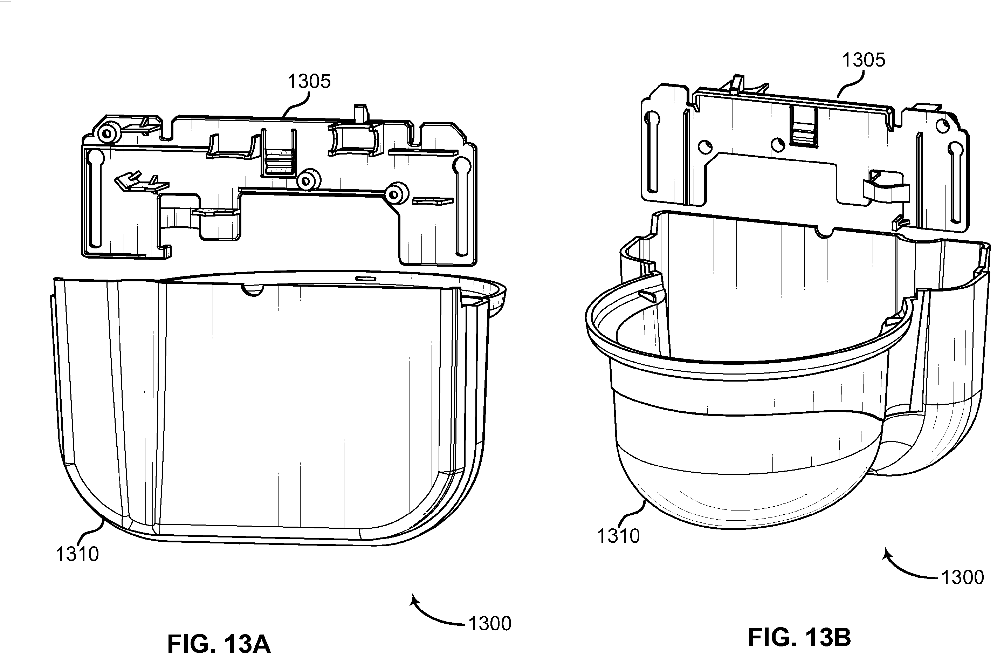

Housing 415 is an example of, or includes aspects of, the corresponding element described with reference to FIGs. 1-3, 5, 11, 14, 18, 19, 21, and 23. Tank front 420 is an example of, or includes aspects of, the corresponding element described with reference to FIGs. 2, 8-10, 14, and 15. Plumbing brace 430 is an example of, or includes aspects of, the corresponding element described with reference to FIGs. 12 and 13. Valve assembly 435 is an example of, or includes aspects of, the corresponding element described with reference to FIGs. 2, 5-7, 14, 21, and 22.

Accordingly, an apparatus for pet water bowl is described. One or more aspects of the apparatus include a housing; a valve assembly within the housing configured to be connected to a water supply line from outside the housing; a valve mechanism within the valve assembly, the valve mechanism being operable to detect water within the housing and to shut off the water supply when water is detected within the housing; and a mechanical indicator mechanism configured to activate in response to the valve mechanism detecting water within the housing to indicate when the valve mechanism is in a closed position, wherein the mechanical indicator moves from a position within the housing to a position at least partially protruding from the housing when activated.

In some aspects, the housing comprises a keyway configured to receive a fastener head, wherein the fastener head extends from a vertical wall.

Some examples of the apparatus and system further include a ball valve mechanism within the valve assembly, the ball valve mechanism being manually operable to control flow of water. Some examples further include an access mechanism configured to lock the housing in a closed position when the ball valve mechanism is in an open position allowing flow of water, and to unlock the housing and allow user access to components within the housing when the ball valve mechanism is in a closed position shutting off the flow of water.

Some examples of the apparatus and system further include a check valve mechanism within the valve assembly, where the check valve mechanism may be installed in a direction to overcome a prescribed pressure and allow flow from the water supply line to pass through the check valve mechanism when a suction is applied to the check valve mechanism. In some aspects, the prescribed pressure is above a siphon pressure of the water supply line, wherein the check valve mechanism closes when the suction is not applied.

Some examples of the apparatus and system further include a float valve mechanism within the housing, the float valve mechanism being operable to control flow of water based on a water level. Some examples further include a sealing mechanism configured to lift the float valve when the housing is opened, wherein the float valve mechanism closes when the housing is opened.

Some examples of the apparatus and system further include an outer bowl for holding water, wherein a water level in the outer bowl is regulated by a float valve. Some examples further include an inner bowl configured to nest within the outer bowl, the inner bowl comprising a check valve to prevent back flow of contaminants from the inner bowl into the outer bowl.

In some aspects, the check valve comprises an umbrella valve. In some aspects, the check valve comprises a duck-bill valve. In some aspects, the check valve comprises a swing valve. In some aspects, the check valve comprises a ball check valve. In some aspects, the check valve comprises a butterfly valve. In some aspects, the check valve comprises a diaphragm check valve.

Some examples of the apparatus and system further include a first channel in the pet water bowl system, wherein the first channel is on a back of the pet water bowl system housing, wherein the first channel leads from a first side of the housing to an entry point on the back of the pet water bowl system housing. Some examples further include a second channel in the pet water bowl system, wherein the second channel is on the back of the pet water bowl system housing, wherein the first channel leads from a second side of the housing to an entry point on the back of the pet water bowl system housing. Some examples further include a rotatable fitting coupled to the pet water bowl housing, wherein the rotatable fitting is configured to align with the first channel and the second channel depending on where the rotatable fitting is rotated. In some aspects, the housing is configured to be connected to a water supply line via the rotatable fitting, wherein the first channel and the second channel are configured to contain the water supply line depending on where the rotatable fitting is rotated.

In some aspects, the water supply line comprises a flexible tube. Some examples further include a water tank coupled to the valve assembly via the water supply line. In some aspects, the water supply line is configured to siphon water from the water tank to the valve assembly.

In some aspects, the water tank is located higher than the valve assembly, wherein water is moved from the water tank into the valve assembly by gravity. In some aspects, the water tank is a hydropneumatic tank. In some aspects, the water tank is part of a reverse osmosis water filtration system.

In some aspects, the water supply line comprises a flexible tube. Some examples further include a water supply coupled to the valve assembly via the water supply line, wherein the water supply is a pressurized water supply. In some aspects, the water supply line comprises a flexible tube. Some examples further include a water supply coupled to the valve assembly via the water supply line, wherein the water supply is a gravity-fed water supply.

### Valve Assembly

The present disclosure describes systems and methods for a leak stop valve system in a pet water bowl system. According to an embodiment, the leak stop valve system includes a housing and a valve assembly within the housing. In some cases, the valve assembly may be connected to a water supply line from outside the housing, wherein the water supply line is configured to siphon water from a water tank to the pet water bowl system of the present disclosure.

An embodiment of the present disclosure includes a valve mechanism within the valve assembly. In some cases, the valve mechanism may be operated to detect water within the housing and subsequently to shut off the water supply when water is detected within the housing. In some cases, when water is detected within the housing to indicate the valve mechanism is in a closed position, a mechanical indicator mechanism may be activated. For example, the mechanical indicator may move from a position within the housing to a position at least partially protruding from the housing when activated.

FIG. 5 shows an example of a side view and a top view of valve assembly 500 according to aspects of the present disclosure. Valve assembly 500 is an example of, or includes aspects of, the corresponding element described with reference to FIGs. 2, 4, 6, 7, 14, 21, and 22.

FIG. 5A shows an example of a side view of valve assembly 500 according to an aspect of the present disclosure. FIG. 5B shows an example of a top view of valve assembly 500 according to an aspect of the present disclosure. As shown in FIGs. 5A-5B, valve assembly 500 includes first line 505, leak stop assembly 510, float valve 550, third line 555, check valve 560, siphon opening 565, t-fitting 570, second valve 575, second outlet 580, and float 582.

As shown in FIGs. 5A-B, valve assembly 500 includes first line 505 which may be adapted to feed valve assembly 500 with water from a water source or water tank (such as the water tank described in FIG. 1). In some cases, first line 505 may transmit water from the water tank to valve assembly 500 under pressure. In some cases, first line 505 may transmit water from the water source to valve assembly 500 by siphon. For example, first line 505 may conduct water from a toilet tank to valve assembly 500 by siphon.

According to an embodiment of the present disclosure, first line 505 may feed water to leak stop assembly 510. As shown in FIG. 5A, leak stop assembly 510 includes inlet 515, first outlet 520, first valve 525, lever 530, absorbent material 535, leak indicator 540, and second line 545.

For example, housing encloses leak stop assembly 510 and leak indicator 540. In some cases, inlet 515 receives water from first line 505, wherein the water is conducted through valve 525. In some cases, the water is conducted out of first outlet 520 and into second line 545 when first valve 525 is in an open position. In some cases, absorbent material 535 is configured to close first valve 525 in case of a rise in the water level in the outer bowl (such as outer bowl or bowl receiving portion described in at least FIG. 4), where the rise may be due to a leak in valve assembly 500. In some cases, absorbent material 535 closes first valve 525 due to increased hydration causing absorbent material 535 to swell and press against lever 530 to close first valve 525. In some cases, the swelling of hydrated absorbent material 535 may simultaneously cause leak indicator 540 to rise from a first position to a second position such that the leak indicator 540 is visible outside housing (as indicated in FIG. 16). For example, the visibility of the leak indicator 540 indicates a leak in valve assembly 500 which may need attention to service valve assembly 500.

In some cases, absorbent material 535 is located at a position higher than the intended water level in the outer bowl as controlled by float valve 550, wherein the valve assembly 500 is operating normally and without leaks such that the water level in the outer bowl does not contact absorbent material 535 unless there is a leak in valve assembly 500.

Additionally, valve assembly 500 comprises third line 555 in-line with check valve 560. As shown in FIG. 5, third line 555 terminates in siphon opening 565. Therefore, third line 555 may be placed in fluid communication with the atmosphere when check valve 560 is open due to the presence of a vacuum introduced via siphon opening 565. In some cases, check valve 560 forms a one way valve that permits air or water to be drawn out of valve assembly 500 via third line 555 and out siphon opening 565. In some cases, third line 555 may be in fluid communication with second line 545 via t-fitting 570.

According to an embodiment, first line 505 siphons water from a water tank and feeds the water via first valve 525 and out of valve assembly 500 via first outlet 520 and into second line 545. Subsequently, second line 545 conducts the water via second valve 575, float valve 525, and out from second outlet 580 so as to convey water to outer bowl. Once outer bowl is appropriately filled with water, buoyancy causes float 582 to close float valve 550 to prevent bowl receiving portion (e.g., outer bowl) from being overfilled with water. Once outer bowl is appropriately filled, float valve 550 maintains the water level below absorbent material 535 such that valve 525 in valve assembly 500 remains open, i.e., the valve 525 remains open unless there is a leak in valve assembly 500. In case of the leak in plumbing assembly, hydration of absorbent material 535 activates and closes valve 525 which prevents further siphoning of water from the water source via first line 505. Once the water level in outer bowl decreases, e.g., due to drinking by a pet or due to evaporation, float valve 550 returns to an open state to replenish the water in the outer bowl.

In some cases, the pet water bowl system may be implemented by attaching the pet water bowl system to a wall via housing (as described in FIG. 4 and 7). Subsequently, first line 505 may be placed in a source of water, such as water tank of an adjacent toilet (as described with reference to FIG. 1A). In some cases, the pet water bowl system may be placed at a level below the water level in the toilet tank when the toilet tank is filled. For example, first line 505 may be placed at the bottom of the water source (e.g., water tank) to ensure the water source provides a sufficient amount of water to bowl receiving portion (e.g., outer bowl). In some examples, first line 505 may terminate in a sinking water filter with sufficient weight to keep first line 505 at the bottom of the water source.

In some cases, second valve 575 may be closed when first line 505 is appropriately placed in the water source. For example, the second valve 575 may be closed such that valve assembly 500 may be closed to the atmosphere via second outlet 580. Subsequently, valve assembly 500 may be primed by applying vacuum pressure to siphon opening 565, e.g., using a syringe, which creates negative pressure within valve assembly 500 and draws water into valve assembly 500 via first line 505. In some cases, second valve 575 may be opened when valve assembly 500 is appropriately primed. For example, the second valve 575 may be opened to provide for water to be siphoned from the water source via first line 505 such that water flows through plumbing assembly, e.g., via first line 505, leak stop assembly 510, second line 545, second valve 575, float valve 550, and the water flows out via second outlet 580 to bowl receiving portion (e.g., outer bowl).

In some cases, check valve 560 prevents breaking of siphon pressure in valve assembly 500 since check valve 560 may be adapted to prevent the passage of air or water via check valve 560 and into third line 555. In some cases, float 582 may become buoyant when bowl receiving portion is filled. For example, the buoyancy of the float 582 may cause the closure of float valve 550 which prevents further passage of water from the water source via first line 505 and into bowl receiving portion. In some cases, water flows into inner bowl when bowl receiving portion is filled, where the water flows to inner bowl via the opening in the bottom of inner bowl where the water is accessible by a pet. As the water level in the bowl receiving portion lowers due to drinking and/or evaporation, float valve 550 opens to permit additional siphoning of water from the water source via first line 505. Accordingly, by operating the float valve based on the water level in the bowl receiving portion, embodiments of the present disclosure are able to automatically replenish the water level in bowl receiving portion.

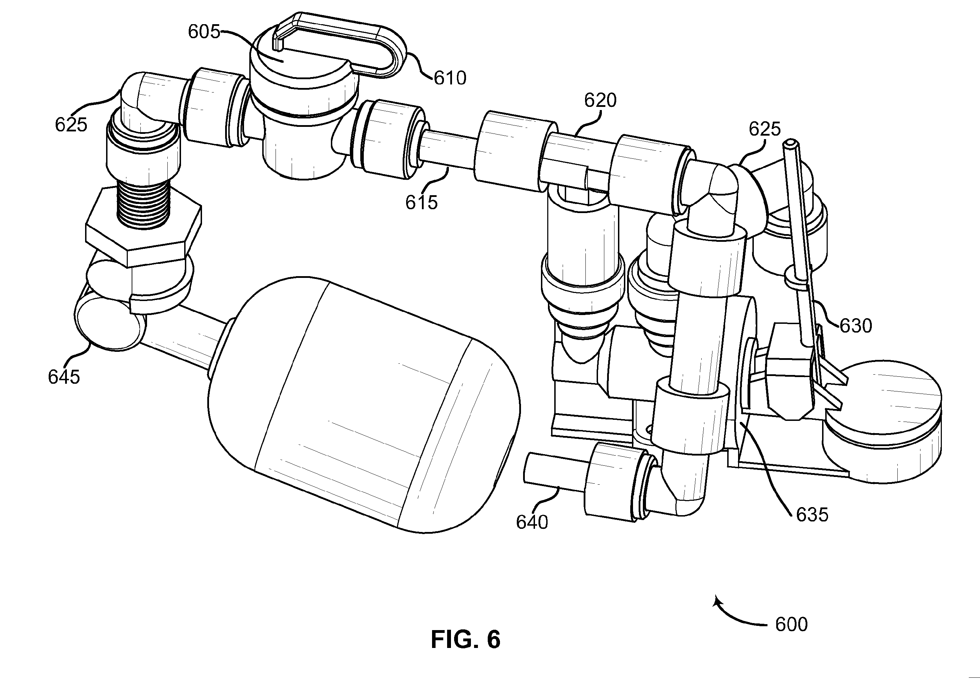

Inlet 515 is an example of, or includes aspects of, the corresponding element described with reference to FIG. 7. Leak indicator 540 is an example of, or includes aspects of, the corresponding element described with reference to FIGs. 6, 7, and 15. Second line 545 is an example of, or includes aspects of, the corresponding element described with reference to FIG. 7.

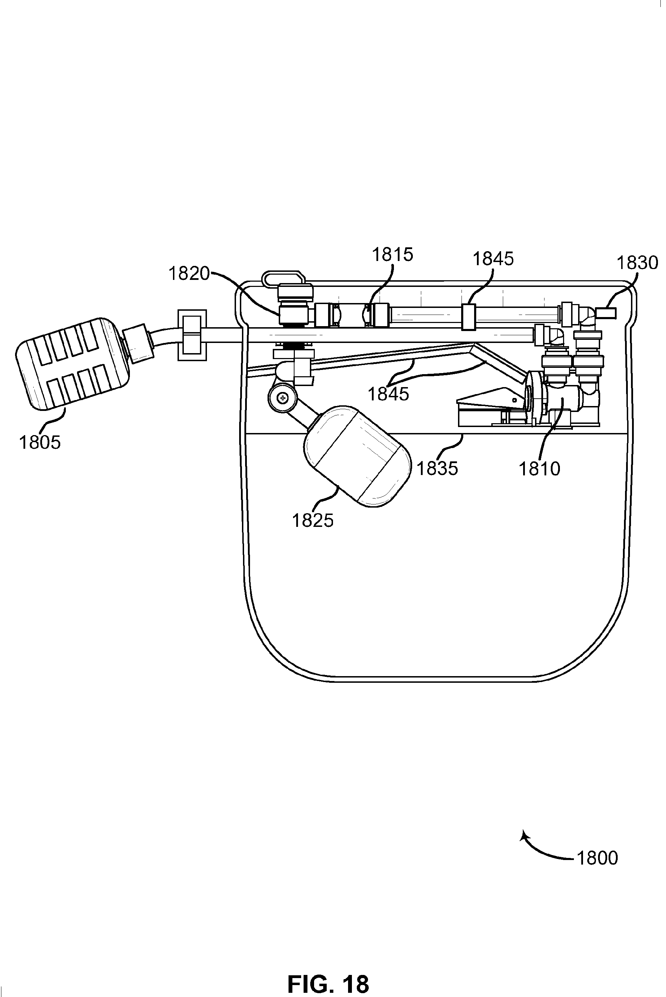

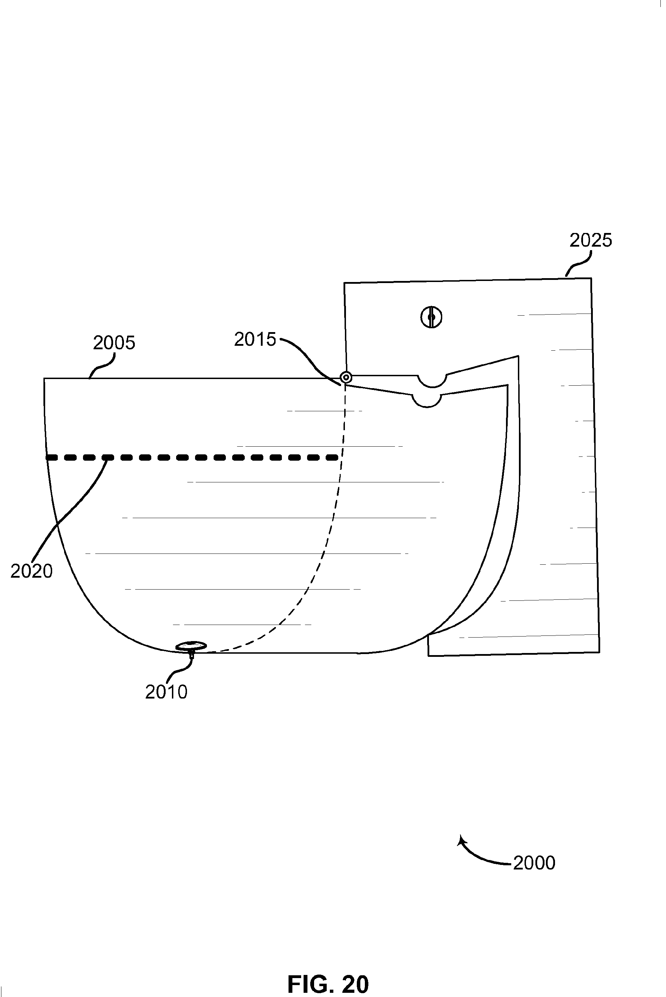

Float valve 550 is an example of, or includes aspects of, the corresponding element described with reference to FIGs. 6, 7, 10, 14, and 18. Check valve 560 is an example of, or includes aspects of, the corresponding element described with reference to FIGs. 19 and 20. Siphon opening 565 is an example of, or includes aspects of, the corresponding element described with reference to FIGs. 6 and 18.

T-fitting 570 is an example of, or includes aspects of, the corresponding element described with reference to FIG. 6. Second valve 575 is an example of, or includes aspects of, the corresponding element described with reference to FIGs. 6 and 7. Float 582 is an example of, or includes aspects of, the corresponding element described with reference to FIGs. 3, 7, and 9-10.

FIG. 6 shows an example of a detailed view of the valve assembly 600 according to aspects of the present disclosure. Valve assembly 600 is an example of, or includes aspects of, the corresponding element described with reference to FIGs. 2, 4, 5, 7, 14, 21, and 22. In one aspect, valve assembly 600 includes ball valve 605, second valve 610, RO tubing 615, t-fitting 620, L-fitting 625, leak indicator 630, mechanical indicator 635, siphon opening 640, and float valve 645.

An embodiment of the present disclosure includes a ball valve mechanism. For example, the ball valve mechanism includes ball valve 605 configured to be operated manually to control flow of water in the valve assembly 600. As shown in FIG. 6, when the ball valve 605 is in an open position to provide for water flow, housing (such as the housing described with reference to FIGs. 2-4) may be locked in a closed position. Additionally, in some cases, the housing may be unlocked to provide user access to components within the housing when the ball valve 605 may be in a closed position shutting off the flow of water.

For example, ball valve 605 may provide for water flow in valve assembly 600 via a ¼" RO tubing 615, t-fitting 620, and float valve 645. Additionally, for example, ball valve 605 may provide for water flow in valve assembly 600 via a set (e.g., two numbers) of stem L-fitting 625. In some cases, the stem L-fitting 625 may be used for inlet. Additionally, in some examples, float valve 645 includes a ¼" stem that pushes into the L-fitting 625. In some cases, valve assembly 600 includes siphon opening 640, wherein the siphon opening mates to a syringe (e.g., a luer lock syringe) to pull in water into the valve assembly 600.

Additionally, as shown in FIG. 6, valve assembly 600 comprises a mechanical indicator mechanism including a leak indicator 630 and a mechanical indicator 635. In some cases, leak indicator 630 and mechanical indicator 635 detect water within the housing to indicate a position of the valve. For example, leak indicator 630 may move from a position within the housing to a position at least partially protruding from the housing when activated.

Ball valve 605 is an example of, or includes aspects of, the corresponding element described with reference to FIGs. 7 and 18. Second valve 610 is an example of, or includes aspects of, the corresponding element described with reference to FIGs. 5 and 7. T-fitting 620 is an example of, or includes aspects of, the corresponding element described with reference to FIG. 5.

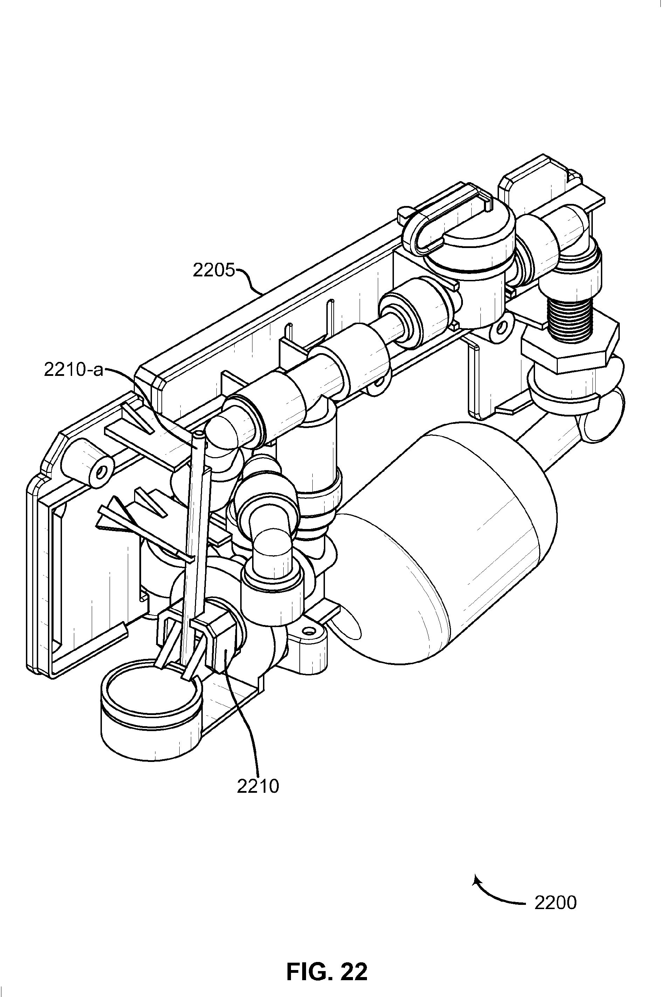

Leak indicator 630 is an example of, or includes aspects of, the corresponding element described with reference to FIGs. 5, 7, and 15. Siphon opening 640 is an example of, or includes aspects of, the corresponding element described with reference to FIGs. 5 and 18. Float valve 645 is an example of, or includes aspects of, the corresponding element described with reference to FIGs. 5, 7, 10, 14, and 18. Mechanical indicator 635 is an example of, or includes aspects of, the corresponding element described with reference to FIGs. 22-23.

Accordingly, an apparatus for pet water bowl is described. One or more aspects of the apparatus include a housing wherein the housing comprises a desired water level; a valve assembly within the housing configured to be connected to a water supply line from outside the housing; valving mechanism within the valve assembly, the valve mechanism being operable to detect water within the housing and to shut off the water supply when water is detected within the housing; and the valve mechanism wherein the valve mechanism is configured to detect water within the housing in excess of a prescribed excess amount above the desired water level.

Some examples of the apparatus and system further include a mechanical indicator mechanism configured to activate in response to the valve mechanism detecting water within the housing to indicate when the valve mechanism is in a closed position, wherein the mechanical indicator moves from a position within the housing to a position at least partially protruding from the housing when activated.

Additionally, an apparatus for pet water bowl is described. One or more aspects of the apparatus include a housing; a valve assembly configured to be connected to a water supply line from outside the housing; a ball valve mechanism within the valve assembly, the ball valve mechanism being manually operable to control flow of water; and an access mechanism configured to lock the housing in a closed position when the ball valve mechanism is in an open position allowing flow of water, and to unlock the housing and allow user access to components within the housing when the ball valve mechanism is in a closed position shutting off the flow of water.

An apparatus for pet water bowl is described. One or more aspects of the apparatus include a valve assembly configured to be connected to a water supply line and a check valve mechanism within the valve assembly, the check valve mechanism being installed in a direction to overcome a prescribed pressure and allow flow from the water supply line to pass through the check valve mechanism when a suction is applied to the check valve mechanism, wherein the prescribed pressure is above a siphon pressure of the water supply line, wherein the check valve mechanism closes when the suction is not applied.

An apparatus for pet water bowl is described. One or more aspects of the apparatus include a housing configured to be connected to a water supply line; a float valve mechanism within the housing, the float valve mechanism being operable to control flow of water based on a water level; and a sealing mechanism configured to lift the float valve when the housing is opened, wherein the float valve mechanism closes when the housing is opened.

### Valve Assembly within the Housing

Existing methods and apparatuses for providing water to pets require manual replenishment of water. In some cases, pets may be provided with a bowl of water by an owner. In some cases, an existing system may supply a water bowl from a reservoir by gravity. In some cases, an existing water device may require replenishing of water by hand (e.g., of the pet owner). As such, these systems may be inconvenient as the owner needs to continually monitor water levels and manually replenish the water. Moreover, the pet may run out of water in case the owner fails to monitor depleted water.

By contrast, embodiments of the present disclosure are configured to prevent monitoring and replenishing of water in a pet water bowl. In some cases, the pet water bowl may be supplied with water from a secondary source, such as a toilet tank. According to an embodiment, the pet water bowl may be supplied by water from a toilet tank, where the toilet tank is automatically replenished with water. Accordingly, by automatically replenishing the tank with water, embodiments of the present disclosure are able to provide a continuous supply of water. Additionally, by performing the automatic replenishment, embodiments are able to minimize monitoring and manually replenishing of the water source by the pet owner.

FIG. 7 shows an example of a pet water bowl system according to aspects of the present disclosure. Pet water bowl system is an example of, or includes aspects of, the corresponding element described with reference to FIGs. 1-4, 8-10, 13-16, and 18-23.

In one aspect, pet water bowl system depicts valve assembly 700 attached to wall mount 730 (such as the wall mount described with reference to FIG. 4), where the valve assembly 700 includes second valve 705, ball valve 710, second line 715, float valve 720, float 725, inlet 735, leak indicator 740, siphon check valve 745, and mechanical indicator 750.

An embodiment of the present disclosure includes leak indicator configured to detect presence of water in the housing. In some cases (e.g., as shown in FIG. 16), leak indicator moves from a position within the housing to a position at least partially protruding from the housing based on the presence of water in the housing. In some cases, the mechanical indicator 750 includes an expansion disk chamber.

As shown in FIG. 7, valve assembly 730 includes siphon check valve 745 that may be operated based on pressure of a water supply line (such as the water supply line described in at least FIG. 1). In some cases, the siphon check valve 745 may be connected to siphon opening (such as the siphon opening described in FIGs. 5-6). Additionally, as shown in FIG. 7, pet water bowl system 700 includes inlet 735. In some cases, inlet 735 includes a top entry 735-a and a bottom entry 735-b. In some examples, the top entry of inlet 735-a accommodates (e.g., obtains water from) an upper tank feed. In some cases, an L-fitting (such as the L-fitting described in FIG. 6) spins up or down the top entry of inlet 735-a.

Second valve 705 is an example of, or includes aspects of, the corresponding element described with reference to FIGs. 5 and 6. Ball valve 710 is an example of, or includes aspects of, the corresponding element described with reference to FIGs. 6 and 18. Second line 715 is an example of, or includes aspects of, the corresponding element described with reference to FIG. 5.

Float valve 720 is an example of, or includes aspects of, the corresponding element described with reference to FIGs. 5, 6, 10, 14, and 18. Float 725 is an example of, or includes aspects of, the corresponding element described with reference to FIGs. 3, 5, 9, and 10.

Valve assembly 730 is an example of, or includes aspects of, the corresponding element described with reference to FIGs. 2, 4-6, 14, 21, and 22. Inlet 735 is an example of, or includes aspects of, the corresponding element described with reference to FIG. 5. Leak indicator 740 is an example of, or includes aspects of, the corresponding element described with reference to FIGs. 5, 6, and 15. Mechanical indicator 750 is an example of, or includes aspects of, the corresponding element described with reference to FIGs. 6, 22, and 23.

FIG. 8 shows an example of an overview of a pet water bowl system 800 according to aspects of the present disclosure. Pet water bowl system 800 is an example of, or includes aspects of, the corresponding element described with reference to FIGs. 1-4, 7, 9, 10, 13-16, and 18-23.

In one aspect, pet water bowl system 800 includes tank front 805, float lift 810, screw 815, detent 820, catch 825, flood level 830, and water level 835.

As shown in FIG. 8, tank front 805 may be shown down. In some cases, tank front 805 may slide up to and may include float lift 810. In some cases, float lift 810 may automatically close float valve (such as the float valve described with reference to FIGs. 5-6). Tank front 805 is an example of, or includes aspects of, the corresponding element described with reference to FIGs. 2, 4, 9, 10, 14, and 15. Float lift 810 is an example of, or includes aspects of, the corresponding element described with reference to FIGs. 3, and 9-10.

An embodiment of the present disclosure include detent and catch for live latch. In some cases, detent 820 may be used for live latching. Additionally or alternatively, in some cases, catch 825 may be used for live latching. FIG. 8 shows screw 815 as being adjusted high on the valve assembly. In some cases, screw 815 may be positioned in front of a pivot point. By providing the screw on the front side of the pivot point, embodiments of the present disclosure provide for ease in adjustment of the float position.

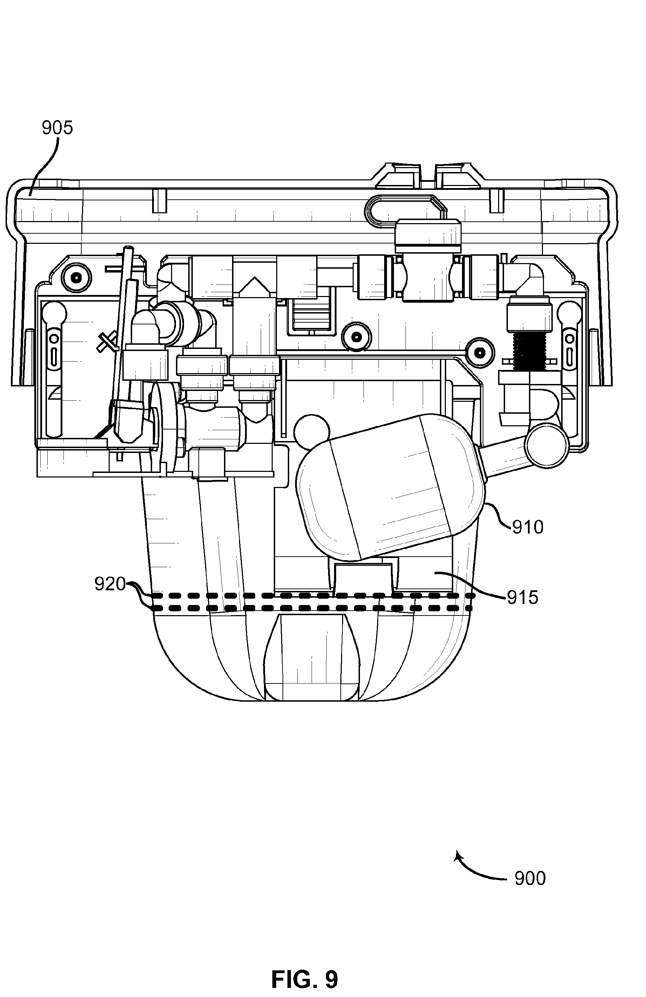

Screw 815 is an example of, or includes aspects of, the corresponding element described with reference to FIG. 9. Detent 820 is an example of, or includes aspects of, the corresponding element described with reference to FIG. 9. Catch 825 is an example of, or includes aspects of, the corresponding element described with reference to FIGs. 9 and 14.

As shown in FIG. 8, flood level 830 indicates flood level of a mechanical indicator (such as the mechanical indicator or leak detection valve described with reference to FIG. 7). Additionally, as shown in FIG. 8, water level 835 indicates adjusted positions of water that may enable appropriate functioning the pet water bowl system.

Flood level 830 is an example of, or includes aspects of, the corresponding element described with reference to FIG. 9. Water level 835 is an example of, or includes aspects of, the corresponding element described with reference to FIGs. 3, 9, and 20.

FIG. 9 shows an example of a pet water bowl system 900 according to aspects of the present disclosure. Pet water bowl system 900 is an example of, or includes aspects of, the corresponding element described with reference to FIGs. 1-4, 7, 8, 10, 13-16, and 18-23.

In one aspect, pet water bowl system 900 includes tank front 905, float 910, float lift 915, and water level 920. As shown in FIG. 9, tank front 905 may be in an 'up' position, i.e., the latch may be on live detent. Further details regarding the detent are provided with reference to FIG. 8. Tank front 905 is an example of, or includes aspects of, the corresponding element described with reference to FIGs. 2, 4, 8, 10, 14, and 15.

FIG. 9 shows float 910 that may be lifted by float lift 915. For example, float lift 915 may lift float 910 sufficiently such that float valve (such as the float valve described in FIG. 6) may be closed. Float 910 is an example of, or includes aspects of, the corresponding element described with reference to FIGs. 3, 5, 7, and 10. Float lift 915 is an example of, or includes aspects of, the corresponding element described with reference to FIGs. 3, 8, and 10.

In some cases, a leak from or a failure of a fitting, valve, or piping may result in activation of mechanical indicator. By activating the mechanical indicator as a result of the leak, embodiments of the present disclosure are able to prevent flooding of the bowls (e.g., inner bowl). Additionally, water level 920 may be adjusted via screw (such as the screw described with reference to FIG. 8) on float valve (such as float valve described in FIGs. 5-8). Water level 920 is an example of, or includes aspects of, the corresponding element described with reference to FIGs. 3, 8, and 20.

FIG. 10 shows an example of a pet water bowl system 1000 according to aspects of the present disclosure. Pet water bowl system 1000 is an example of, or includes aspects of, the corresponding element described with reference to FIGs. 1-4, 7-9, 13-16, and 18-23.

In one aspect, pet water bowl system 1000 includes tank front 1005, float 1015, and float valve 1020. In one aspect, tank front 1005 includes float lift 1010. For instance, when float lift 1010 may be in an 'up' position, the float 1015 may be in contact with the surface of the water (such as water level described with reference to FIGs. 3 and 8-9). Accordingly, float 1015 may be shut off. In some aspects, removal of the tank front 1005 may cause the float lift 1010 to contact the float 1015 and close the float valve 1020.

Tank front 1005 is an example of, or includes aspects of, the corresponding element described with reference to FIGs. 2, 4, 8, 9, 14, and 15. Float lift 1010 is an example of, or includes aspects of, the corresponding element described with reference to FIGs. 3, 8, and 9. Float 1015 is an example of, or includes aspects of, the corresponding element described with reference to FIGs. 3, 5, 7, and 9. Float valve 1020 is an example of, or includes aspects of, the corresponding element described with reference to FIGs. 5-7, 14, and 18.

FIG. 11 shows an example of a housing 1100 according to aspects of the present disclosure. In one aspect, housing 1100 includes a tube channel in a wall mount.

FIG. 11 shows a rear surface of housing 1100 of the pet water bowl system (such as the pet water bowl system described with reference to FIGs. 1-10). In one aspect, housing 1100 includes first channel 1105, rotatable fitting 1110, and second channel 1115. For example, first channel 1105 corresponds top entry of water via a ¼" tubing.

In some examples, a 90 stem (e.g., L-fitting such as described in FIGs. 6-7) and a female fitting (such as rotatable fitting 1110) may enable rotation into a vertically up position for providing for a top entry of the water. As shown in FIG. 11, the 90 stem and the female fitting are in a 'down' position. In some cases, the first channel 1105 and the second channel 1115 at a rear surface of the housing 1100 (e.g., wall mount of the housing) provides for a water supply pipe (such as the water supply pipe described in FIG. 1) to enter at bottom of the housing 1100 (e.g., wall mount of the housing). In some examples, the first channel 1105 and the second channel 1115 includes pipe keeper teeth.

In some aspects, the housing 1100 is configured to be connected to a water supply line via a rotatable fitting, where the first channel 1105 and the second channel 1115 are configured to contain the water supply line depending on where the rotatable fitting is rotated.

According to some aspects, housing 1100 includes a first channel 1105 and a second channel 1115, where the first channel 1105 is on a back of the pet water bowl system housing 1100 and leads from a first side of the housing 1100 to an entry point on the back of the pet water bowl system, and the second channel 1115 is on the back of the pet water bowl system and leads from a second side of the housing 1100 to an entry point on the back of the pet water bowl system housing 1100. Housing 1100 is an example of, or includes aspects of, the corresponding element described with reference to FIGs. 1-4, 14, 18, 19, 21, and 23.

According to some aspects, rotatable fitting 1110 is coupled to the pet water bowl housing 1100, wherein the rotatable fitting 1110 is configured to align with the first channel 1105 and the second channel 1115 depending on where the rotatable fitting 1110 is rotated.

According to some aspects, rotatable fitting 1110 is coupled to the pet water bowl housing 1100, wherein the rotatable fitting 1110 is configured to align with the first channel 1105 and the second channel 1115 depending on where the rotatable fitting 1110 is rotated, wherein the housing 1100 is configured to be connected to a water supply line via the rotatable fitting 1110, wherein the first channel 1105 and the second channel 1115 are configured to contain the water supply line depending on where the rotatable fitting 1110 is rotated. Rotatable fitting 1210 is an example of, or includes aspects of, the corresponding element described with reference to FIG. 18.

According to some aspects, housing 1100 includes second channel 1115 in the pet water bowl system, wherein the second channel 1115 is on the back of the pet water bowl system housing 1100, wherein the first channel 1105 leads from a second side of the housing 1100 to an entry point on the back of the pet water bowl system housing 1100.

According to some aspects, housing 1100 includes second channel 1115 in the pet water bowl system, wherein the second channel 1115 is on the back of the pet water bowl system housing 1100, wherein the first channel 1105 leads from a second side of the housing 1100 to an entry point on the back of the pet water bowl system housing 1100.

Accordingly, an apparatus for pet water bowl is described. One or more aspects of the apparatus include an outer bowl for holding water, wherein a water level in the outer bowl is regulated by a float valve and an inner bowl configured to nest within the outer bowl, the inner bowl comprising a check valve to prevent back flow of contaminants from the inner bowl into the outer bowl.

Some examples of the apparatus and system further include a water supply line comprising a flexible tube coupled to the float valve. Some examples further include a water tank coupled to a valve assembly via the water supply line, wherein the valve assembly comprises the float valve.

Some examples of the apparatus and system further include a water supply line comprising a flexible tube. Some examples further include a water supply coupled to a valve assembly via the water supply line, wherein the valve assembly comprises the float valve, wherein the water supply is a pressurized water supply.

Some examples of the apparatus and system further include a water supply line comprising a flexible tube. Some examples further include a water supply coupled to a valve assembly via the water supply line, wherein the valve assembly comprises the float valve, wherein the water supply is a gravity-fed water supply.

### Plumbing Brace

FIG. 12 shows an example of a plumbing brace 1200 according to aspects of the present disclosure. Plumbing brace 1200 is an example of, or includes aspects of, the corresponding element described with reference to FIGs. 4 and 13. In one aspect, plumbing brace 1200 includes stop 1205, first shape 1210, second shape 1215, and third shape 1220.

As shown in FIG. 12, plumbing brace 1200 includes stop 1205, where the stop 1205 may be configured to prevent a user from trying to fold the siphon opening (such as the siphon opening described with reference to FIGs. 5-6) in an incorrect way.

Additionally, FIG. 12 shows first shape 1210, where the first shape 1210 provides for a leak indicator (such as the leak indicator or leak flag described with reference to FIG. 6) to be set in place with the valve assembly (such as the valve assembly described with reference to at least FIGs. 4-8). In some cases, the plumbing brace 1200 may be appropriately fit in the valve assembly and tightened using a screw.

In some cases, as shown in FIG. 12, second shape 1215 fills in a void left by a key hole in the tank front (such as tank front described in FIG. 4) for a closed ball valve handle. Additionally, third shape 1220 may be formed using an injection molding tool, wherein the injection molding tool removes a bypass plug to create third shape 1220. By creating the third shape, embodiments of the present disclosure are able to provide for the float valve with a small hex to be captured.

FIG. 13 shows an example of a pet water bowl system 1300 including plumbing brace 1305 and an outer bowl 1310 according to aspects of the present disclosure. Pet water bowl system 1400 is an example of, or includes aspects of, the corresponding element described with reference to FIGs. 1-4, 7-10, 14-16, and 18-23.

In one aspect, pet water bowl system 1300 includes plumbing brace 1305 and outer bowl 1310. FIG. 13 depicts a system of attaching plumbing brace 1305 with outer bowl 1310. For example, FIG. 13A shows a rear view of the plumbing brace 1305 and a rear view of outer bowl 1310. Additionally, for example, FIG. 13B shows a front view of the plumbing brace 1305 and a front view of outer bowl 1310.

In some cases, pet water bowl system 1300 may be implemented by attaching the outer bowl 1310 to a wall via plumbing brace 1305. Plumbing brace 1305 is an example of, or includes aspects of, the corresponding element described with reference to FIGs. 4 and 12. Outer bowl 1310 is an example of, or includes aspects of, the corresponding element described with reference to FIGs. 2, 4, 19, and 21-23.

FIG. 14 shows an example of a pet water bowl system 1400 according to aspects of the present disclosure. Pet water bowl system 1400 is an example of, or includes aspects of, the corresponding element described with reference to FIGs. 1-4, 7-10, 13, 15, 16, and 18-23.

In one aspect, pet water bowl system 1400 includes housing 1405 and valve assembly 1440. In one aspect, housing 1405 includes tank front 1410 and plumbing brace 1425. FIG. 14 shows the tank front 1410 rotated (e.g., rotated 180deg) for clarity.

As shown in FIG. 14, tank front 1410 includes catch 1415 and screw bosses 1420. In some cases, catch 1415 (such as catch described with reference to FIG. 8) is used for live hinge. In some cases, screw bosses 1420 are configured to slide in keyways (such as the key way described in FIG. 2).

Housing 1405 is an example of, or includes aspects of, the corresponding element described with reference to FIGs. 1-4, 11, 18, 19, 21, and 23. Tank front 1410 is an example of, or includes aspects of, the corresponding element described with reference to FIGs. 2, 4, 8-10, and 15. Catch 1415 is an example of, or includes aspects of, the corresponding element described with reference to FIG. 8.

In one aspect, plumbing brace 1425 includes float lift 1430 and live hinge 1435. As shown in FIG. 14, live hinge 1435 provides detent (such as the detent described in FIG. 8). For example, the detent hold tank front 1410 in 'up' position. Additionally, live hinge 1435 provides a catch (e.g., a second catch) to prevent accidental removal. Float lift 1430 is an example of, or includes aspects of, the corresponding element described with reference to FIGs. 5-8, 11, and 18.

In one aspect, valve assembly 1440 includes siphon fitting 1445. In some cases, as shown in FIG. 14, tank front 1410 may be in an 'up' position. By placing the tank front in the up position, embodiments of the present disclosure are able to provide for removal of the inner bowl and the outer bowl while drawing siphon. For example, siphon fitting 1445 may refer to a siphon L-fitting configured to rotate by 90deg for access by a syringe (such as the syringe described with reference to FIG. 6). Valve assembly 1440 is an example of, or includes aspects of, the corresponding element described with reference to FIGs. 2, 4-7, 21, and 22.

### Pet Water Bowl System

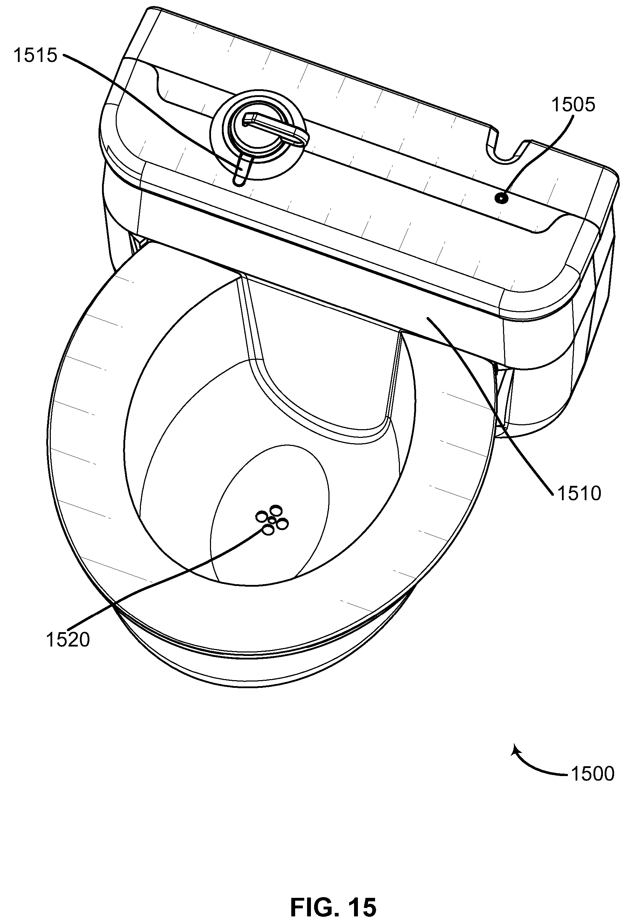

FIG. 15 shows an example of a top view of a pet water bowl system 1500 according to aspects of the present disclosure. Pet water bowl system 1500 is an example of, or includes aspects of, the corresponding element described with reference to FIGs. 1-4, 7-10, 13, 14, 16, and 18-23.

In one aspect, pet water bowl system 1500 includes mechanical indicator 1505, tank front 1510, and center hole 1520. In one aspect, tank front 1510 includes notch 1515. As shown in FIG. 15, notch 1515 in tank front 1510 may provide for a user to shut off ball valve (such as ball valve described with reference to FIGs. 2, 6, and 18) to slide up the tank front 1510. In some cases, notch 1515 may be shut off to provide for removal of the inner bowl and the outer bowl (such as the inner bowl and the outer bowl described with reference to at least FIG. 4). Additionally, in some cases, notch 1515 may be shut off to draw in siphon (such as the siphon or water supply pipe described in FIGs. 1-2).

By shutting off the notch, embodiments of the present disclosure are able to prevent occurrence of spills when the outer bowl is removed and continued filling of the outer bowl while performing a cleaning operation. In some cases, the continued filling of the outer bowl may soak a leak-stop valve when the outer bowl may be replaced. Tank front 1510 is an example of, or includes aspects of, the corresponding element described with reference to FIGs. 2, 4, 8-10.

Additionally, the inner bowl includes center hole 1520. In some cases, the center hole 1520 may be configured to capture a check valve (e.g., a silicone umbrella valve). Additionally, center hole 1520 may be configured to enable easy removal of the bowl for a cleaning operation. Referring again to FIG. 4, the inner bowl and the outer bowl may be nested while using the check valve (e.g., umbrella valve) in the center hole 1520.

As shown in FIG. 15, leak indicator 1505 may partially protrude from the housing when activated. For example, mechanical indicator 1505 may move position from within the housing to the partial protrusion in case of water detection within the housing. Mechanical indicator 1505 is an example of, or includes aspects of, the corresponding element described with reference to FIGs. 5-7 and 22-23.

FIG. 16 shows an example of a pet water bowl system 1600 according to aspects of the present disclosure. The example shown includes pet water bowl system 1600, water tank 1605, and water supply line 1620. Pet water bowl system 1600 is an example of, or includes aspects of, the corresponding element described with reference to FIGs. 1-4, 7-10, 13-15, and 18-23.

FIG. 16 shows pet water bowl system 1600 siphoning from water tank of a real human toilet 1605. In some cases, pet water bowl system 1600 may be an auto-refill pet water bowl. Accordingly, pet water bowl system 1600 may be placed lower than the lowest water level during flushing of the water tank 1605 to maintain siphon.

FIG. 16 depicts a first variant of the pet water bowl system. In some cases, the first variant 1600 may be designed for indoor use and may automatically refill the bowl from a continuous water source 1605. In some cases, the first variant 1600 may be installed easily (e.g., without hiring a plumber). In some cases, the first variant of the pet water bowl 1600 may be designed based on technologies such as reverse osmosis (RO) and aquarium hobbyists. In some cases, a float valve (such as the float valve described with reference to at least FIGs. 5-10) maintains the water at a preset level. Additionally, the first variant 1600 includes a mechanical indicator (such as the mechanical indicator described with reference to at least FIGs. 5-8, 15, and 22-23) that provides redundancy to assure leak prevention while using minimum (e.g., approximately zero) water pressure and/or plumbing skills.

In some cases, the first variant of the pet water bowl 1600 uses a siphon (e.g., water supply line 1620) from a toilet tank reservoir 1605 and small gauge piping. In some cases, the siphon and the gauge piping may be installed easily (e.g. using a screwdriver). For example, the siphon may be designed by drawing water into the device using a syringe (e.g., an included syringe). According to an example, a red indicator may appear in case the mechanical indicator is activated. In some cases, the water supply line 1620 may be installed on either side of a toilet, via an interior wall, or via a basement or crawlspace in case an installation in an adjoining room or hallway is preferred by a user.

An embodiment of the present disclosure describes a second variant of the pet water bowl, wherein the second variant has a one-gallon reserve tank with a port on the bottom. The arrangement of the second variant (such as described with reference to FIG. 1B) may be a modified version of a pull chain toilet. In some cases, the additional tank may be located on the wall above the pet water bowl system. In some cases, the additional tank may gravity-feed to the float valve in the wall mount assembly. In some cases, the reserve tank may be refilled with a water pitcher at a height appropriate for the pet owner.

In some cases, the second variant may not use the mechanical indicator (e.g., potential leak volume is reduced). In some cases, the second variant of the pet water bowl may not include a siphon check valve. The first inlet elbow in the plumbing assembly may be rotated upwards to provide for entry through the top of the wall mount. In some cases, the second variant does not use a water line installation. By using the second variant of the pet water bowl that does not need a water line installation, embodiments of the present disclosure ensure easy and convenient installation of the second variant.

An embodiment of the present disclosure includes a third variant of the pet water bowl. In some cases, the third variant (such as described with reference to FIG. 1C) may include an angle stop valve with a ¼" RO opening. In some cases, the third variant may be connected directly to a reverse osmosis filter due to utilization of same plumbing fittings and pipe as the filter. In some cases, the third variant may be directly connected to an ice maker line of a refrigerator (such as described with reference to FIG. 1D).

By providing the ability to connect the third variant to an installed (e.g., existing in the home) indoor apparatus, embodiments of the present disclosure are able to significantly expand the number of installation options by enabling connectivity to a cold-water source (such as a sink or a dishwasher). In some cases, the third variant may use a pressure reducer and a mechanical indicator in the plumbing assembly. In some cases, the third variant may not include the check valve for the siphon. In some cases, the third variant may be installed after examining risks of claims/lawsuits due to a leakage and an impact to the insurance. In some examples, the third variant of the pet water bowl may offer an RO system (e.g., a branded mini RO system).

According to some aspects, water tank 1605 may be coupled to the valve assembly (such as the valve assembly described in FIG. 5) in housing of pet water bowl system 1600 via the water supply line 1620. In some aspects, the water tank 1605 is located higher than the valve assembly, where water is moved from the water tank 1605 into the valve assembly by gravity. In some aspects, the water tank 1605 is a hydropneumatic tank. In some aspects, the water tank 1605 is part of a reverse osmosis water filtration system.

According to some aspects, water tank 1605 is coupled to a valve assembly via the water supply line 1620, wherein the valve assembly comprises the float valve. According to some aspects, water tank 1605 is coupled to the rotatable fitting via the water supply line 1620. In some aspects, the water tank 1605 is located higher than the rotatable fitting, where water is moved from the water tank 1605 into the rotatable fitting by gravity.

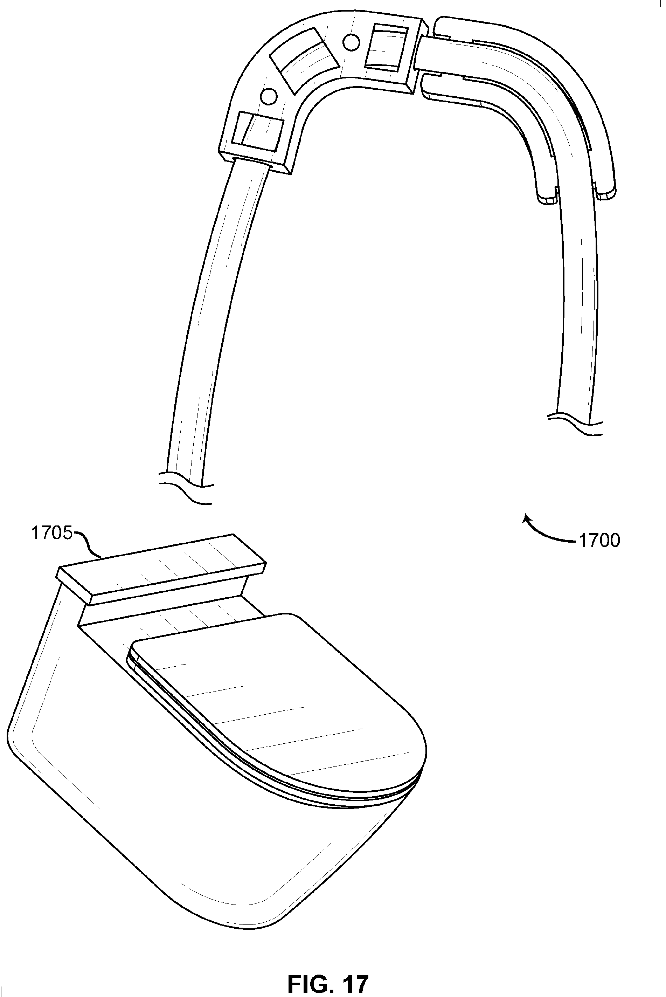

In one aspect, water tank 1605 includes filter head inlet 1610 and RO flow bend 1615. For example, RO inlet flow bend 1615 may be used to prevent crushing by a lid of the water tank 1605. Filter head inlet 1610 is an example of, or includes aspects of, the corresponding element described with reference to FIG. 18. RO flow bend 1615 is an example of, or includes aspects of, the corresponding element described with reference to FIG. 17. Water supply line 1620 is an example of, or includes aspects of, the corresponding element described with reference to FIGs. 1 and 11.

In some cases, at least one of the three variants of the pet water bowl may be available in a compact form factor with nested rectangular body and bowl. In some cases, each of the three variants may be provided in different colors. In some cases, each of the three variants may have a deep bowl to help inhibit water slopping out. In some examples, a customer may prefer a metal bowl (e.g., stainless steel, enameled steel, powder coated aluminum, etc.) for the pet water bowl system.

FIG. 17 shows an example of an RO flow bend 1700 and water tank of a human toilet 1705 according to aspects of the present disclosure. RO flow bend 1700 is an example of, or includes aspects of, the corresponding element described with reference to FIG. 16.

FIG. 17 shows an RO flow bend 1700 that may be positioned at a filter head inlet (such as the filter head inlet described with reference to FIG. 16). In some cases, the RO flow bend 1700 may be configured to prevent crushing of an RO pipe at a lid of the water tank (such as water tank of human toilet 1705). For example, an additional spacer may be provided to ensure the toilet tank lid fits evenly. In some examples, an additional flow bend may be provided to assist inside bends when a water supply line (such as the water supply line described in FIGs. 1 and 16) is against a wall.

FIG. 18 shows an example of an example pet water bowl system 1800 according to aspects of the present disclosure. Pet water bowl system 1800 is an example of, or includes aspects of, the corresponding element described with reference to FIGs. 1-4, 7-10, 13-16, and 19-23.

In one aspect, pet water bowl system 1800 includes filter head inlet 1805, mechanical indicator 1810, rotatable fitting 1815, ball valve 1820, float valve 1825, siphon opening 1830, and wall mount assembly 1835.

According to an embodiment of the present disclosure, filter head inlet 1805 may be configured to drop into a toilet reservoir to weight the end of the pipe. In some cases, filter head inlet 1805 may be used to exclude obstructive debris from entering into the valve assembly (such as the valve assembly described with reference to FIG. 5). For example, filter head inlet 1805 may be positioned at a distance of less than or equal to 2m from the pet water bowl system. Filter head inlet 1805 is an example of, or includes aspects of, the corresponding element described with reference to FIG. 16.

In some cases, mechanical indicator 1810 (e.g., leak detection valve or leak stop valve) may be configured to disconnect siphon flow based on leak detection in the pet water bowl system. Additionally or alternatively, in some cases, mechanical indicator 1810 may be configured to disconnect siphon flow based on valve failure in the pet water bowl system. For example, mechanical indicator 1810 may be replaceable and may expand cotton puck activates when wetted. Mechanical indicator 1810 is an example of, or includes aspects of, the corresponding element described with reference to FIGs. 6-7 and 22-23.

According to an embodiment, rotatable fitting 1815 may refer to a ¼" Y-fitting. In some cases, rotatable fitting 1815 may be push-fit. In some cases, rotatable fitting 1815 may be used by aquarium hobbyists and reverse osmosis applications. Rotatable fitting 1815 is an example of, or includes aspects of, the corresponding element described with reference to FIG. 11.

In some cases, ball valve 1820 may provide for a user to close the pet water bowl system for cleaning a bowl (such as the inner bowl and the outer bowl described with reference to FIG. 4). Additionally, in some cases, ball valve 1820 may be used to draw siphon and to limit water to a pet. By providing ball valve in the housing, embodiments of the present disclosure ensure additional safety while a user may be on vacation. In some cases, ball valve 1820 may be configured to maintain siphon. Ball valve 1820 is an example of, or includes aspects of, the corresponding element described with reference to FIGs. 6 and 7.

In some cases, float valve 1825 may be used to maintain water at a preset level. Float valve 1825 is an example of, or includes aspects of, the corresponding element described with reference to FIGs. 5-7, 10, and 14.

According to an embodiment of the present disclosure, siphon opening 1830 may refer to a bare ¼" R.O. pipe. In some cases, the R.O. pipe daylights at the side opposite to the inlet pipe (such as the inlet pipe described with reference to FIG. 7). In some cases, syringe may form a good seat with an O-ring inserted into the syringe end (e.g., luer lock syringe end). Siphon opening 1830 is an example of, or includes aspects of, the corresponding element described with reference to FIGs. 5 and 6.

In some examples, wall mount assembly 1835 may be formed from two injection molded pieces that may join at a center line. In some cases, the front panel may be removed to show an internal element. In some cases, a back side of the reservoir may mate to wall assembly at the wall mount assembly 1835. In some cases, wall mount assembly 1835 may be reversible.

By providing the reversible wall mount assembly, embodiments of the present disclosure are able to provide for a customer to install the wall mount assembly on a side of the toilet tank that may be suitable for the inlet. In some cases, a screw may secure to a wall or a cabinetry at each corner (e.g., four corner). Accordingly, by providing the screw for the securing purpose, embodiments are able to hold fast and counteract moment arm from weight of water. Wall mount assembly 1835 is an example of, or includes aspects of, the corresponding element described with reference to FIGs. 1-5, 11, 14, 19, and 21.

In one aspect, wall mount assembly 1835 includes internal spine 1840. In some cases, internal spine 1840 may be created when a front half and a rear half of wall mount assembly 1835 is sonic welded. In some cases, internal spine 1840 may be configured to strengthen the wall mount assembly 1835. Additionally, internal spine 1840 may fix ball valve 1820 and mechanical indicator 1810 firmly in place. By providing the internal spine to strengthen the wall mount assembly and fix the ball valve and mechanical indicator, embodiments of the present disclosure provide for quick assembly and a highly strong wall mount assembly.

In some cases, check valve 1845 may refer to an in-line check valve. In some cases, the check valve 1845 may be installed such as to provide for a syringe (such as the syringe described with reference to FIGs. 6, 14, and 16) to draw in water for siphon when ball valve 1820 may be closed. Check valve 1845 is an example of, or includes aspects of, the corresponding element described with reference to FIGs. 16 and 20.

FIG. 19 shows an example of a top view of pet water bowl system 1900 according to aspects of the present disclosure. Pet water bowl system 1900 is an example of, or includes aspects of, the corresponding element described with reference to FIGs. 1-4, 7-10, 13-16, 18, and 20-23.

In one aspect, pet water bowl system 1900 includes wall mount assembly 1905, inner bowl 1910, outer bowl 1915, and check valve 1920.

FIG. 19 shows an upper part of wall mount assembly 1905. As shown in the figure, wall mount assembly 1905 may extend below a rear surface of the outer bowl 1915. For example, the outer bowl 1915 pivots into the wall mount assembly 1905 such that the rear surface clears the float valve (such as the float valve described with reference to FIGs. 5-8).

In some cases, the inner bowl 1920 may be nested in the outer bowl 1915. In some cases, a check valve 1920 (e.g., an umbrella valve) may be located at a bottom surface of the inner bowl 1910 to provide for entry of fresh water into the inner bowl 1910 as the pet drinks. In some cases, the bowl (e.g., inner bowl 1910) may be cleaned by closing the ball valve (such as the ball valve described with reference to at least FIG. 18) on a top surface of the wall mount assembly 1905 and lifting out the inner bowl 1910.

According to an embodiment, check valve 1920 (e.g., an umbrella valve) at the bottom of inner bowl 1910 may retain the water in the inner bowl 1910. In some cases, check valve 1920 may prevent saliva or debris from contaminating the outer bowl 1915. By using the check valve 1920 (e.g., an umbrella valve) to seal the opening in the inner bowl, embodiments of the present disclosure are able to prevent flow of water out of the opening when the inner bowl is removed from the outer bowl. In some cases, outer bowl 1915 may be cleaned by pivoting up at the front and lifting out.

In some examples, inner bowl 1910 may be manufactured using powder coated aluminum. In some examples, inner bowl 1910 may be manufactured using enameled steel. By using powder coated aluminum or enameled steel for manufacturing the inner bowl, embodiments of the present disclosure provide for an ease in the bowl cleaning operation. In some cases, the outer bowl 1915 may be manufactured using an injection molding process. In some cases, check valve 1920 and outer bowl 1915 may contain antimicrobial additives to inhibit biofilms and bacteria.

According to some aspects, check valve 1920 draws water from the water source (such as the water source described in FIGs. 1 and 16) through the center hole at the bottom surface of the inner bowl and into the water supply tubing to establish a siphon. In some aspects, the check valve 1920 includes an umbrella valve. In some aspects, the check valve 1920 includes a duck-bill valve. In some aspects, the check valve 565 includes a swing valve. In some aspects, the check valve 1920 includes a ball check valve. In some aspects, the check valve 1920 includes a butterfly valve. In some aspects, the check valve 1920 includes a diaphragm check valve. Check valve 1920 is an example of, or includes aspects of, the corresponding element described with reference to FIGs. 5 and 20.

Wall mount assembly 1905 is an example of, or includes aspects of, the corresponding element described with reference to FIGs. 1-5, 11, 14, 18, and 21. Inner bowl 1910 is an example of, or includes aspects of, the corresponding element described with reference to FIGs. 4 and 20-22. Outer bowl 1915 is an example of, or includes aspects of, the corresponding element described with reference to FIGs. 2, 4, 13, and 21-23.

FIG. 20 shows an example of an example pivot pet water bowl system 2000 according to aspects of the present disclosure. Pet water bowl system 2000 is an example of, or includes aspects of, the corresponding element described with reference to FIGs. 1-4, 7-10, 13-16, 18, 19, and 21-23.

In one aspect, pet water bowl system 2000 includes inner bowl 2005 and wedge 2025. In one aspect, inner bowl 2005 includes check valve 2010, overflow indicator 2015, and water level 2020.

An embodiment of the present disclosure implements a version of a pivot for attaching the inner bowl and the outer bowl with the wall mount assembly. In some cases, the method of inserting the outer bowl into the wall mount assembly (such as the wall mount assembly described with reference to FIG. 18) may be a version of a pivot.

An embodiment of the present disclosure is configured to insert the bowl into the wall mount assembly while protecting the float valve. In some cases, the float valve (such as the float valve described with reference to FIGs. 5-8) may hang downwards into the inner bowl 2005. In some cases, the pivot system is used to create a single-handed operation while preventing release of a hardware.

FIG. 20 depicts a water level 2020 (such as the water level described with reference to FIGs. 8-9. In some cases, inner bowl 2005 may depict a water level 2020 that corresponds to the water level of bowl receiving portion (i.e., outer bowl) as controlled by the float valve. In some cases, the water level 2020 in the inner bowl 2005 may be adjustable (e.g., via float valve as described with reference to FIG. 9) for appropriate working of the pet water bowl system. Additionally, as shown in FIG. 20, an overflow indicator 2015 may prevent overflowing of the inner bowl 2005 (e.g., via a mechanical indicator such as described with reference to FIGs. 9 and 18).

In some cases, the inner bowl 2005 may be attached to wedge 2025 based on the version of the pivot. For example, the wedge 2025 may be added back to the wall assembly after the attachment operation is completed.

Inner bowl 2005 is an example of, or includes aspects of, the corresponding element described with reference to FIGs. 4, 19, 21, and 22. Check valve 2010 is an example of, or includes aspects of, the corresponding element described with reference to FIGs. 5 and 19. Water level 2020 is an example of, or includes aspects of, the corresponding element described with reference to FIGs. 3, 8, and 9.

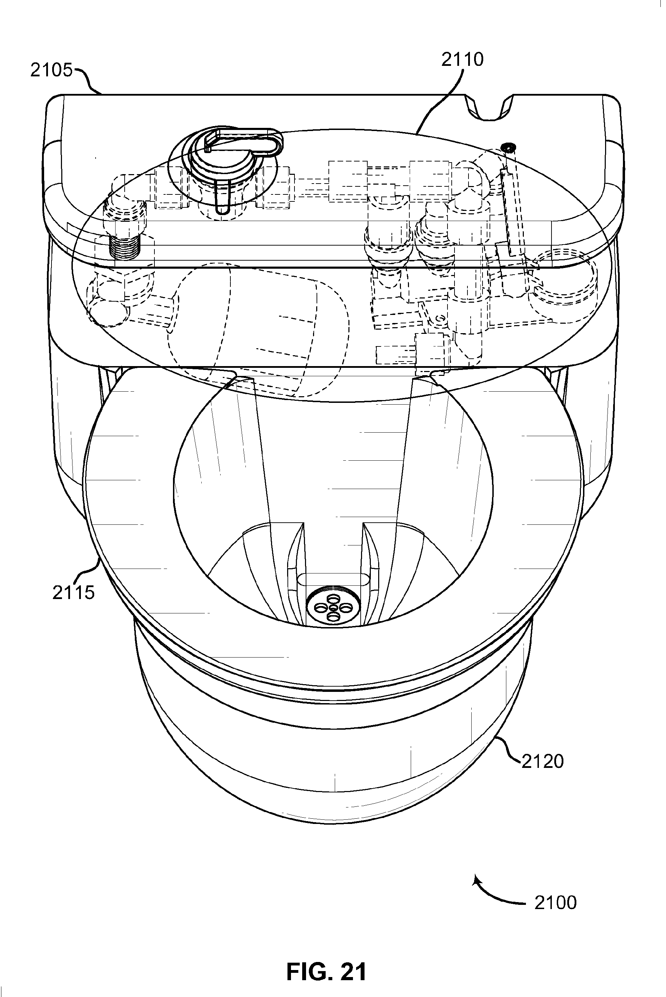

FIG. 21 shows an example of a top frontal view of pet water bowl system 2100 according to aspects of the present disclosure. Pet water bowl system 2100 is an example of, or includes aspects of, the corresponding element described with reference to FIGs. 1-4, 7-10, 13-16, 18-20, and 22-23.

In one aspect, pet water bowl system 2100 includes housing 2105, inner bowl 2115, and outer bowl 2120. In one aspect, housing 2105 includes valve assembly 2110.

FIG. 21 shows pet water bowl system 2100 with the valve assembly 2110 installed in housing 2105. By installing the valve assembly in the pet water bowl system, embodiments of the present disclosure are able to prevent manual monitoring and manual replenishing of water in the pet water bowl system. In some cases, the pet water bowl system 2100 may be supplied with water via water supply pipe (such as the water supply pipe described in at least FIGs. 1 and 16) and the valve assembly 2110 from a secondary source, such as a toilet tank.

In some cases, valve assembly 2110 is located at a position higher than the intended water level in inner bowl 2115 as controlled by float valve (such as the float valve described with reference to FIGs. 5-8), wherein the valve assembly 2110 is operating normally and without leaks such that the water level in inner bowl 2115 may be adjusted using the float valve. As shown in FIG. 21, inner bowl 2115 may be nested within outer bowl 2120.

Housing 2105 is an example of, or includes aspects of, the corresponding element described with reference to FIGs. 1-5, 11, 14, 18, and 19. Valve assembly 2110 is an example of, or includes aspects of, the corresponding element described with reference to FIGs. 2, 4-7, 14, and 22.

Inner bowl 2115 is an example of, or includes aspects of, the corresponding element described with reference to FIGs. 4, 19, 20, and 22. Outer bowl 2120 is an example of, or includes aspects of, the corresponding element described with reference to FIGs. 2, 4, 13, 19, and 22.

FIG. 22 shows an example of a mechanical indicator 2210 according to aspects of the present disclosure. Valve assembly 2200 is an example of, or includes aspects of, the corresponding element described with reference to FIGs. 2, 4-7, 14, and 21.

In one aspect, pet water bowl system includes valve assembly 2200. In one aspect, valve assembly 2200 includes plumbing brace 2205 and mechanical indicator 2210.

As shown in FIG. 22, the top of the mechanical indicator 2210-a may include or refer to a mechanical pin that rests within housing (e.g., under a top surface of the brace 2205), and the top of the mechanical indicator 2210-a moves to a position at least partially protruding from the housing when activated (e.g., the top of the mechanical indicator 2310-a includes a pin extending above the top surface of the brace 2205, as shown in the center hold of FIG. 15).

Plumbing brace 2205 is an example of, or includes aspects of, the corresponding element described with reference to FIGs. 12 and 14. Mechanical indicator 2210 is an example of, or includes aspects of, the corresponding element described with reference to FIGs. 7, 18, and 23.

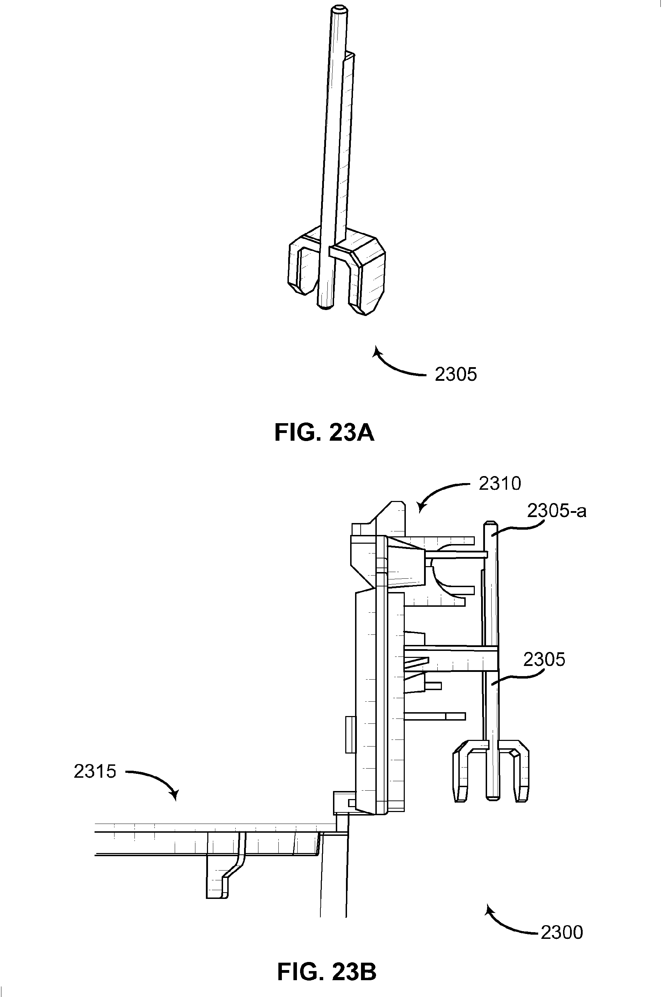

FIG. 23 shows an example of a pet water bowl system 2300 depicting a mechanical indicator 2305 according to aspects of the present disclosure.

FIG. 23A shows mechanical indicator 2305 that may be placed in housing (such as housing 2310 in FIG. 23B). In some cases, mechanical indicator 2305 may be configured to ensure leak prevention while using minimum (e.g., approximately zero) water pressure and/or plumbing skills. In case of water in the housing, a red indicator may appear in case the mechanical indicator 2305 is activated.

FIG. 23B shows an example of a pet water bowl system 2300 depicting mechanical indicator 2305 according to aspects of the present disclosure. Pet water bowl system 2300 is an example of, or includes aspects of, the corresponding element described with reference to FIGs. 1-4, 7-10, 13-16, 18-20, and 22.

In one aspect, pet water bowl system 2300 includes housing 2310 and outer bowl 2315. In one aspect, housing 2310 includes mechanical indicator 2305. Mechanical indicator 2305 is an example of, or includes aspects of, the corresponding element described with reference to FIGs. 7, 18, and 22.

Accordingly, an apparatus for pet water bowl is described. One or more aspects of the apparatus include a first channel in the pet water bowl system, wherein the first channel is on a back of the pet water bowl system housing, wherein the first channel leads from a first side of the housing to an entry point on the back of the pet water bowl system housing; a second channel in the pet water bowl system, wherein the second channel is on the back of the pet water bowl system housing, wherein the first channel leads from a second side of the housing to an entry point on the back of the pet water bowl system housing; and a rotatable fitting coupled to the pet water bowl housing, wherein the rotatable fitting is configured to align with the first channel and the second channel depending on where the rotatable fitting is rotated, wherein the housing is configured to be connected to a water supply line via the rotatable fitting, wherein the first channel and the second channel are configured to contain the water supply line depending on where the rotatable fitting is rotated.

In some aspects, the water supply line comprises a flexible tube. Some examples further include a water tank coupled to the rotatable fitting via the water supply line. In some aspects, the water tank is located higher than the rotatable fitting, wherein water is moved from the water tank into the rotatable fitting by gravity.

In some aspects, the water supply line is configured to siphon water from the water tank to the rotatable fitting. In some aspects, the water supply line comprises a flexible tube. Some examples further include a water supply coupled to the rotatable fitting via the water supply line, wherein the water supply is a pressurized water supply.

In some aspects, the water supply line comprises a flexible tube. Some examples further include a water supply coupled to the rotatable fitting via the water supply line, wherein the water supply is a gravity-fed water supply.

Some examples of the method and apparatus further include providing a first channel in the pet water bowl system, wherein the first channel is on a back of the pet water bowl system housing, and leads from a first side of the housing to an entry point on the back of the pet water bowl system housing. Some examples further include providing a second channel in the pet water bowl system, wherein the second channel is on the back of the pet water bowl system housing, and leads from a second side of the housing to an entry point on the back of the pet water bowl system housing. Some examples further include coupling a rotatable fitting to the pet water bowl housing, wherein the rotatable fitting is configured to align with the first channel and the second channel depending on where the rotatable fitting is rotated. Some examples further include connecting the housing to a water supply line via the rotatable fitting, wherein the first channel and the second channel are configured to contain the water supply line depending on where the rotatable fitting is rotated.

Some examples of the method and apparatus further include providing a flexible tube as the water supply line. Some examples further include coupling a water tank to the valve assembly via the water supply line.

In some aspects, the water supply line is configured to siphon water from the water tank to the valve assembly. In some aspects, the water tank is located higher than the valve assembly, and water is moved from the water tank into the valve assembly by gravity.

Some examples of the method and apparatus further include providing a flexible tube as the water supply line. Some examples further include coupling a pressurized water supply to the valve assembly via the water supply line.

Some examples of the method and apparatus further include providing a flexible tube as the water supply line. Some examples further include coupling a gravity-fed water supply to the valve assembly via the water supply line.

### A Pet Water Supply Process

The present disclosure describes systems and methods associated with a pet product, such as a pet water bowl designed for indoor use. For example, the pet water bowl may be designed in three different variants, where each variant may be paired with at least one of the differently shaped bowls that attach to the wall mount assembly. In some examples, each of the three variants may use the same wall mount assembly that comprises the plumbing features. In some examples, a minor change may be incorporated in the plumbing assembly to accommodate the different variants. According to an embodiment, a variant may not use an intervention from pet owners for refilling. According to an embodiment, a variant may be refilled easily. For example, a first bowl may appear as a miniature toilet due to high online attention. For example, a second bowl may have a slim profile and may be approximately rectangular in shape.

In some cases, the water bowl may include different arrangements of the five valves (e.g., the different valves). For example, at least two variants of the pet water bowl may automatically be refilled safely with fresh water as the pet drinks.

An embodiment of the present disclosure is configured to miniaturize the pet water bowl. For example, the pet water bowl may be maximally miniaturized (e.g., miniaturized to the greatest extent possible), wherein a width of the wall mount assembly is slightly higher than a width of the float on the float valve. In some examples, a bathroom may have a pedestal sink or a return wall next to the toilet that provides for high clearance. In some examples, a toilet may have the code-minimum 30" of total clearance between a shower and lower cabinet. The pet water bowl may be mounted on a cabinet next to the code-minimum toilet. In some examples, a version of the pet water bowl with a rectangular bowl may project 7" and may be mounted on a cabinet next to the code-minimum toilet. In some examples, a version of the pet water bowl with a toilet bowl appearance projects 8.5 inches and may be compatible with a bathroom (e.g., most bathrooms). In some examples, the miniaturization of the pet water bowl enhances desirability in a hallway or a tight space. In some examples, the miniaturization of the pet water bowl increases a "cute factor" while still remaining useful for large breed dogs. In some cases, the miniaturization of the pet water bowl prevents a trip hazard and spill by ensuring the water bowl is placed above the ground and away from human feet.

The pet water bowl includes a plumbing pipe and fittings that may be assembled into the wall mount assembly and shipped to the customer, where the assembly is ready to be installed by the customer. In some cases, the customer may select a mounting location and obtain a supply pipe of appropriate length to reach the bottom of the toilet reservoir. A filter head may be installed at an end of the pipe to filter sediment and weight down the pipe end. In some cases, the pipe may enter near the wall from the bottom. By entering the pipe near the wall from the bottom, embodiments ensure the piping is neat and tidy while reducing a need for a fitting that may potentially result in leakage and positions the piping away from sharp teeth. The pipe may be secured to the wall with the provided adhesive pipe fasteners. The wall mount assembly may be designed to work with a variant of the pet water bowl (or a change thereof).

According to an embodiment, the pet water bowl may be designed to reduce spills. In some cases, the bowl may be elevated. By using the elevated bowl, embodiments of the present disclosure are able to reduce a likelihood of water spills by a pet while trying to paw at the bowl or pick the bowl with the pet teeth. Additionally, the pet water bowl may be close to the mouth of the pet. Additionally, the water level may be low enough that the snout may enter the small bowl. For example, a slow motion video of a dog (such as a Labrador) at a big bowl may show backwards-cupped tongue of the dog pulling water backwards (e.g., towards the dog) and out of the front of the bowl. Additionally, the portion designed to look like a toilet seat may be sloped back towards the bowl. In some examples, a large dog may be a messy drinker and tend to drink a lot of water. In some cases, in case of the first variant of the pet water bowl and the second variant of the pet water bowl, the water bowl refills slowly. Since the water bowl refills slowly, the water level may be lower when a large dog or a thirsty dog finish drinking water.

An embodiment of the present disclosure is configured to provide for a pet owner to install the pet water bowl at a height that is comfortable for the pet. In some cases, by elevating the bowl (e.g., place the bowl at a predetermined height), embodiments of the present disclosure ensure less strain on muscles and joints of the pet which may be helpful for an old pet and a pet of a large breed.

In some cases, a water bowl may be heavy and awkward to refill at a sink. For example, a consumer (e.g., a customer with reduced strength or mobility) may find difficulty in stooping to pick up the bowl and return the bowl to the floor without spilling. In some cases, a bowl within a bowl ensures that each bowl may be removed separately while reducing the weight of each bowl. In some examples, the bowl may be removed with one hand, leaving the other hand for balance of the customer.

According to an embodiment of the present disclosure, the pet water bowl includes a mechanical indicator. In some cases, the mechanical indicator may be designed to prevent leaks in RO and aquarium systems. Since the RO pipe extends continuously from the toilet reservoir tank directly to the mechanical indicator, a leak inside the unit may disconnect the flow (e.g., supply) of water. In some cases, a red plastic rod may indicate when the mechanical indicator may be activated. For example, the mechanical indicator may be utilized in the first variant, the second variant and the third variant.

According to an embodiment, the pet water bowl includes a mechanical setup. By using a mechanical system, embodiments of the present disclosure prevent use of a battery or an electrical outlet. For example, the first variant and the second variant of the pet water bowl may be installed by the user (e.g., without a need to hire a plumber).

In some cases, refilling a water bowl manually may use attention to monitor water level in the bowl, which is time consuming and may interface with bio-films and saliva. For example, in case the water refilling is delayed, pets may stay without water and become dehydrated. According to an embodiment of the present disclosure, the first variant and the third variant may be refilled automatically. Additionally, the second variant may be refilled less often and hence be filled using a water pitcher or sink spray wand at a convenient height.

According to an embodiment of the present disclosure, the float valve may replenish the pet water bowl while a pet is drinking. By replenishing the pet water bowl while the pet is drinking, embodiments of the present disclosure are able to incorporate a preference of pets (e.g., dogs and cats) to drink from a water source that flows (e.g., a pet may prefer drinking from garden hoses or running sinks, etc.). In some cases, the float valve may function appropriately in case the user removes the drinking bowl, does not replace the bowl, and/or forgets to close the ball valve. For example, the float valve is the smallest float valve available commercially. In some examples, the float valve of the pet water bowl may be connected directly into the bottom of the ball valve. By connecting the float valve at the bottom of the ball valve, embodiments of the present disclosure are able to save space and assist in the miniaturization of the pet water bowl.

An embodiment of the present disclosure includes a pet water bowl with two chambers separated by an umbrella valve. In some cases, the umbrella valve prevents backflow of contaminants (e.g., large dogs may be messy drinkers) from the bowl into the large reservoir. By preventing the backflow of contaminants, embodiments of the present disclosure are able to inhibit saliva and biofilm accumulation in the back chamber or on the float valve. Accordingly, the frequency of cleaning may be reduced. Additionally, since the rear chamber is enclosed, the darkness in the chamber may inhibit algae growth in the rear chamber in case the device is mounted in direct sunlight. In some cases, an antimicrobial additive may be added to the injection molded plastic and the umbrella valve.

In some cases, the user may turn the ball valve into the "off" position to raise the tank cover and access the bowl and siphon orifice. Accordingly, by turning the ball valve to the 'off' position, embodiments of the present disclosure ensure drawing a siphon is a foolproof process. In some cases, the user may swing the "L" fitting with the orifice out and pull the plunger out to utilize the provided 60ml syringe. In some cases, the negative pressure may overcome the spring in the check valve which provides for the user to draw water into the device to create the siphon. Since the siphon pressure is low, the pressure may not overcome the spring in the check valve. By using the check valve in a different direction, embodiments of the present disclosure are able to assure that customers do not have to negotiate another ball valve that may be left pointing in the wrong direction, resulting in potential leaks.

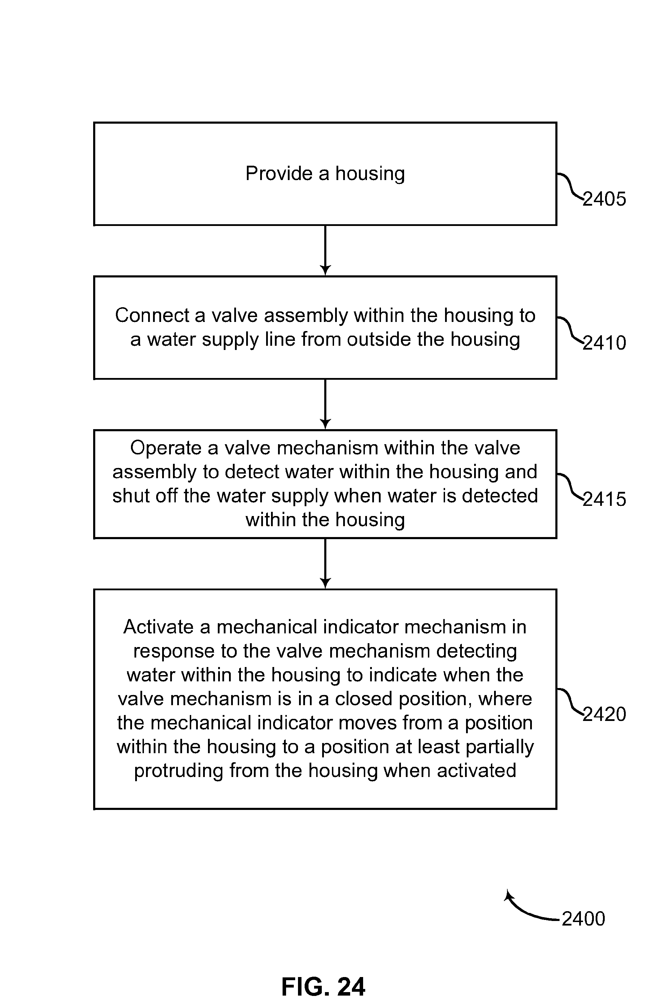

FIG. 24 shows an example of a method 2400 for operating the pet water bowl according to aspects of the present disclosure. Generally, these operations are performed according to the methods and processes described in accordance with aspects of the present disclosure. In some cases, the operations described herein are composed of various substeps, or are performed in conjunction with other operations.

At operation 2405, the system provides a housing. In some cases, the operations of this step refer to, or may be performed by, a pet water bowl system as described with reference to FIGs. 1-4, 7-10, 13-16, 18-21, and 22-23.

At operation 2410, the system connects a valve assembly within the housing to a water supply line from outside the housing. In some cases, the operations of this step refer to, or may be performed by, a pet water bowl system as described with reference to FIGs. 1-4, 7-10, 13-16, 18-21, and 22-23.

At operation 2415, the system operates a valve mechanism within the valve assembly to detect water within the housing and shut off the water supply when water is detected within the housing. In some cases, the operations of this step refer to, or may be performed by, a pet water bowl system as described with reference to FIGs. 1-4, 7-10, 13-16, 18-21, and 22-23.

At operation 2420, the system activates a mechanical indicator mechanism in response to the valve mechanism detecting water within the housing to indicate when the valve mechanism is in a closed position, where the mechanical indicator moves from a position within the housing to a position at least partially protruding from the housing when activated. In some cases, the operations of this step refer to, or may be performed by, a valve assembly as described with reference to FIGs. 2, 4-7, 14, 21, and 22.

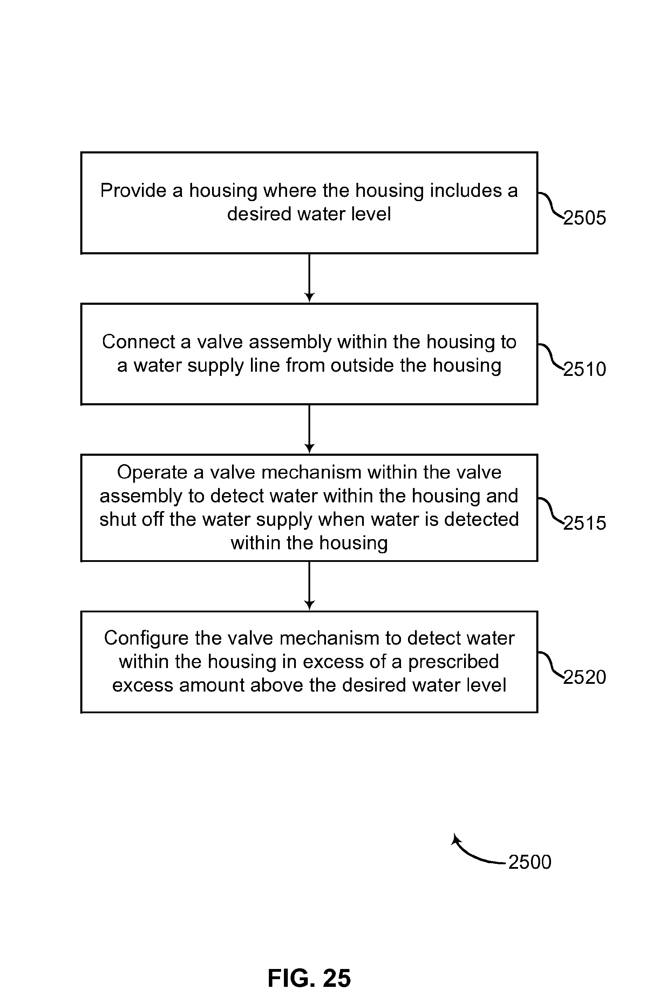

FIG. 25 shows an example of a method 2500 for operating the pet water bowl according to aspects of the present disclosure. Generally, these operations are performed according to the methods and processes described in accordance with aspects of the present disclosure. In some cases, the operations described herein are composed of various substeps, or are performed in conjunction with other operations.

At operation 2505, the system provides a housing where the housing includes a desired water level. In some cases, the operations of this step refer to, or may be performed by, a pet water bowl system as described with reference to FIGs. 1-4, 7-10, 13-16, 18-21, and 22-23.

At operation 2510, the system connects a valve assembly within the housing to a water supply line from outside the housing. In some cases, the operations of this step refer to, or may be performed by, a pet water bowl system as described with reference to FIGs. 1-4, 7-10, 13-16, 18-21, and 22-23.

At operation 2515, the system operates a valve mechanism within the valve assembly to detect water within the housing and shut off the water supply when water is detected within the housing. In some cases, the operations of this step refer to, or may be performed by, a valve assembly as described with reference to FIGs. 2, 4-7, 14, 21, and 22.

At operation 2520, the system configures the valve mechanism to detect water within the housing in excess of a prescribed excess amount above the desired water level. In some cases, the operations of this step refer to, or may be performed by, a valve assembly as described with reference to FIGs. 2, 4-7, 14, 21, and 22.

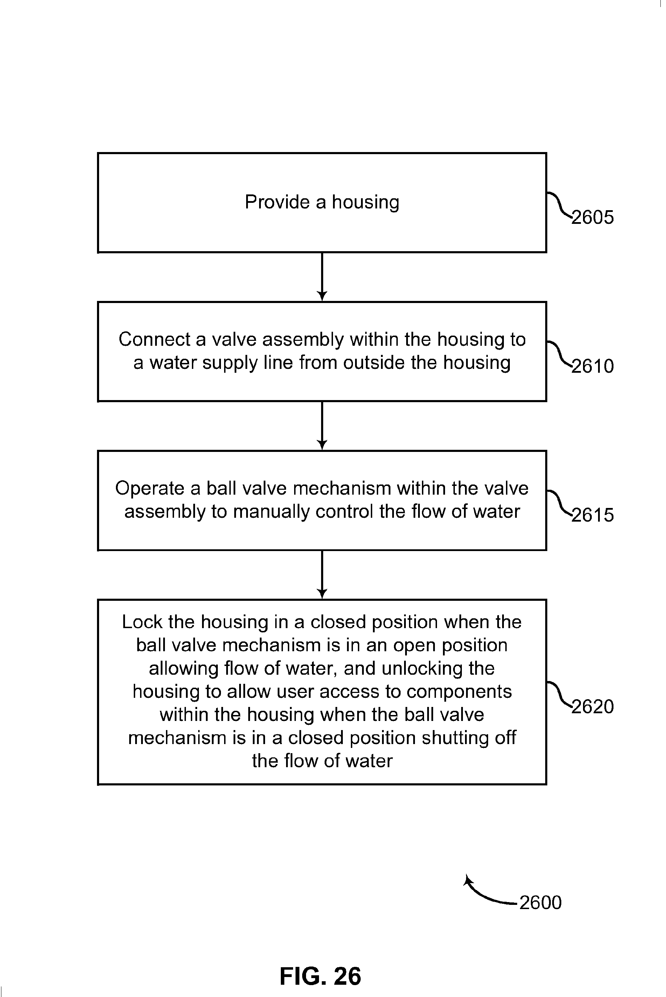

FIG. 26 shows an example of a method 2600 for operating the pet water bowl according to aspects of the present disclosure. Generally, these operations are performed according to the methods and processes described in accordance with aspects of the present disclosure. In some cases, the operations described herein are composed of various substeps, or are performed in conjunction with other operations.

At operation 2605, the system provides a housing. In some cases, the operations of this step refer to, or may be performed by, a pet water bowl system as described with reference to FIGs. 1-4, 7-10, 13-16, 18-21, and 22-23.

At operation 2610, the system connects a valve assembly within the housing to a water supply line from outside the housing. In some cases, the operations of this step refer to, or may be performed by, a pet water bowl system as described with reference to FIGs. 1-4, 7-10, 13-16, 18-21, and 22-23.

At operation 2615, the system operates a ball valve mechanism within the valve assembly to manually control the flow of water. In some cases, the operations of this step refer to, or may be performed by, a valve assembly as described with reference to FIGs. 2, 4-7, 14, 21, and 22.

At operation 2620, the system locks the housing in a closed position when the ball valve mechanism is in an open position allowing flow of water, and unlocking the housing to allow user access to components within the housing when the ball valve mechanism is in a closed position shutting off the flow of water. In some cases, the operations of this step refer to, or may be performed by, a valve assembly as described with reference to FIGs. 2, 4-7, 14, 21, and 22.

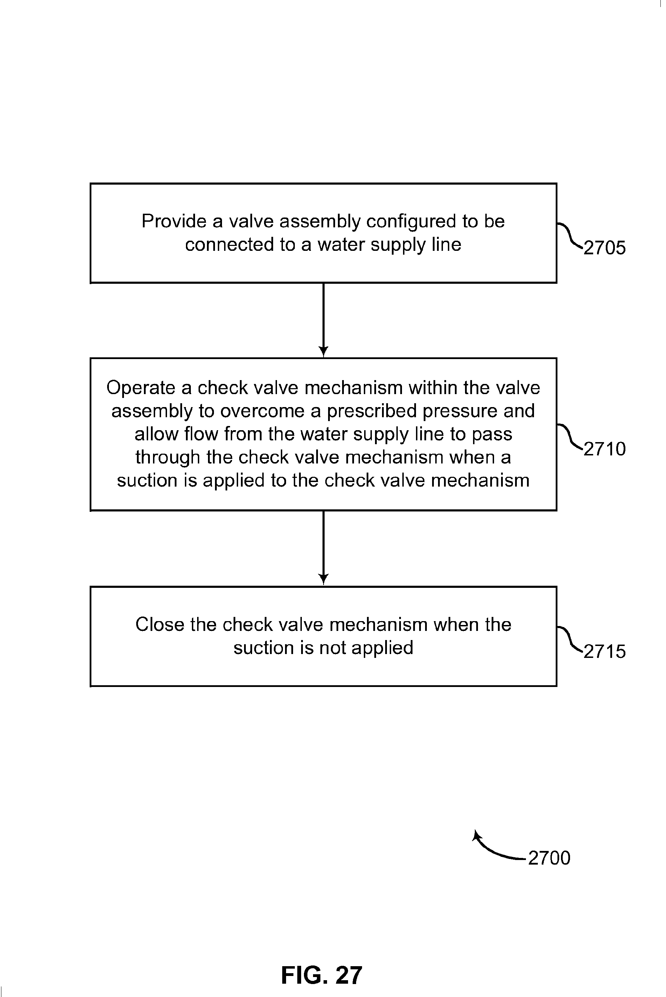

FIG. 27 shows an example of a method 2700 for operating the pet water bowl according to aspects of the present disclosure. Generally, these operations are performed according to the methods and processes described in accordance with aspects of the present disclosure. In some cases, the operations described herein are composed of various substeps, or are performed in conjunction with other operations.

At operation 2705, the system provides a valve assembly configured to be connected to a water supply line. In some cases, the operations of this step refer to, or may be performed by, a pet water bowl system as described with reference to FIGs. 1-4, 7-10, 13-16, 18-21, and 22-23.

At operation 2710, the system operates a check valve mechanism within the valve assembly to overcome a prescribed pressure and allow flow from the water supply line to pass through the check valve mechanism when a suction is applied to the check valve mechanism. In some cases, the operations of this step refer to, or may be performed by, a valve assembly as described with reference to FIGs. 2, 4-7, 14, 21, and 22.

At operation 2715, the system closes the check valve mechanism when the suction is not applied. In some cases, the operations of this step refer to, or may be performed by, a valve assembly as described with reference to FIGs. 2, 4-7, 14, 21, and 22.

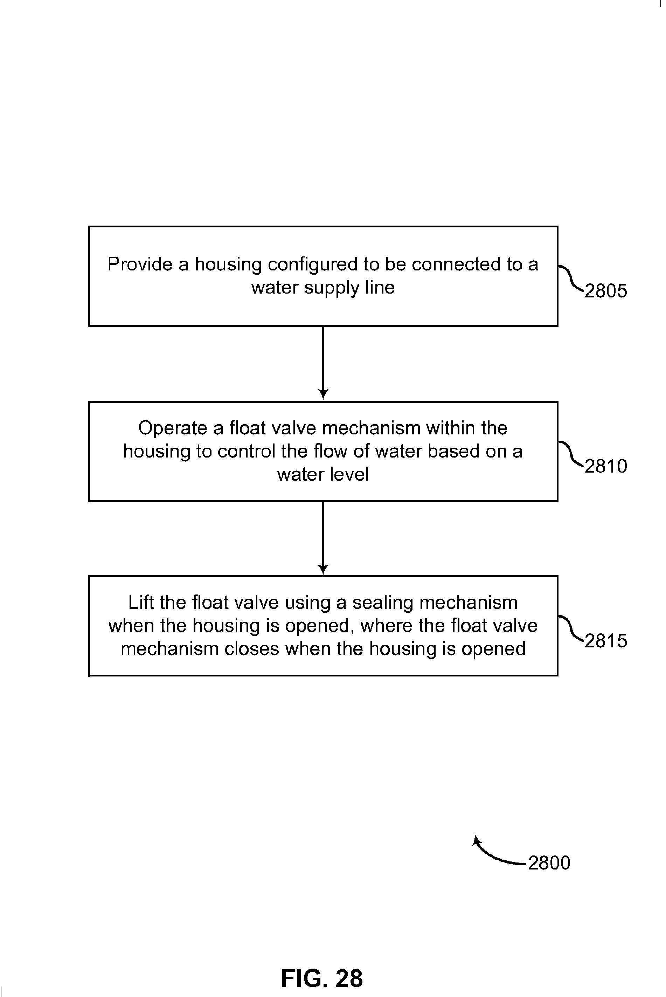

FIG. 28 shows an example of a method 2800 for operating the pet water bowl according to aspects of the present disclosure. Generally, these operations are performed according to the methods and processes described in accordance with aspects of the present disclosure. In some cases, the operations described herein are composed of various substeps, or are performed in conjunction with other operations.

At operation 2805, the system provides a housing configured to be connected to a water supply line. In some cases, the operations of this step refer to, or may be performed by, a pet water bowl system as described with reference to FIGs. 1-4, 7-10, 13-16, 18-21, and 22-23.

At operation 2810, the system operates a float valve mechanism within the housing to control the flow of water based on a water level. In some cases, the operations of this step refer to, or may be performed by, a float valve mechanism as described with reference to FIGs. 5-8.

At operation 2815, the system lifts the float valve using a sealing mechanism when the housing is opened, where the float valve mechanism closes when the housing is opened. In some cases, the operations of this step refer to, or may be performed by, a float valve mechanism as described with reference to FIGs. 5-8.

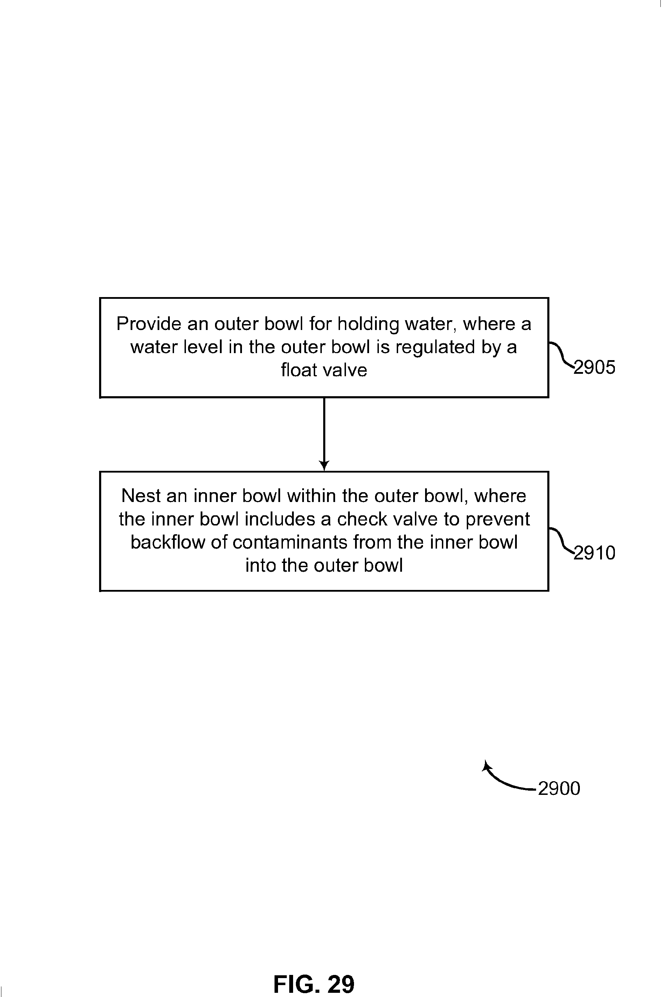

FIG. 29 shows an example of a method 2900 for operating the pet water bowl according to aspects of the present disclosure. Generally, these operations are performed according to the methods and processes described in accordance with aspects of the present disclosure. In some cases, the operations described herein are composed of various substeps, or are performed in conjunction with other operations.

At operation 2905, the system provides an outer bowl for holding water, where a water level in the outer bowl is regulated by a float valve. In some cases, the operations of this step refer to, or may be performed by, a pet water bowl system as described with reference to FIGs. 1-4, 7-10, 13-16, 18-21, and 22-23.

At operation 2910, the system nests an inner bowl within the outer bowl, where the inner bowl includes a check valve to prevent backflow of contaminants from the inner bowl into the outer bowl. In some cases, the operations of this step refer to, or may be performed by, a pet water bowl system as described with reference to FIGs. 1-4, 7-10, 13-16, 18-21, and 22-23.

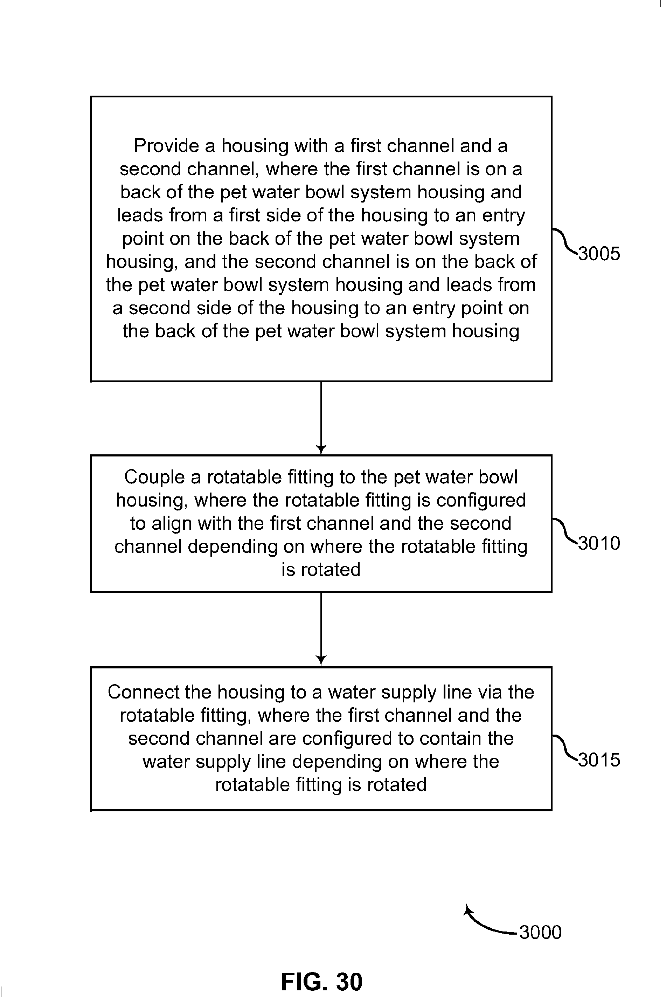

FIG. 30 shows an example of a method 3000 for operating the pet water bowl according to aspects of the present disclosure. Generally, these operations are performed according to the methods and processes described in accordance with aspects of the present disclosure. In some cases, the operations described herein are composed of various substeps, or are performed in conjunction with other operations.

At operation 3005, the system provides a housing with a first channel and a second channel, where the first channel is on a back of the pet water bowl system housing and leads from a first side of the housing to an entry point on the back of the pet water bowl system housing, and the second channel is on the back of the pet water bowl system housing and leads from a second side of the housing to an entry point on the back of the pet water bowl system housing. In some cases, the operations of this step refer to, or may be performed by, a housing as described with reference to FIGs. 1-5, 11, 14, 18, 19, 21, and 23.

At operation 3010, the system couples a rotatable fitting to the pet water bowl housing, where the rotatable fitting is configured to align with the first channel and the second channel depending on where the rotatable fitting is rotated. In some cases, the operations of this step refer to, or may be performed by, a rotatable fitting as described with reference to FIGs. 11 and 18.

At operation 3015, the system connects the housing to a water supply line via the rotatable fitting, where the first channel and the second channel are configured to contain the water supply line depending on where the rotatable fitting is rotated. In some cases, the operations of this step refer to, or may be performed by, a rotatable fitting as described with reference to FIGs. 11 and 18.

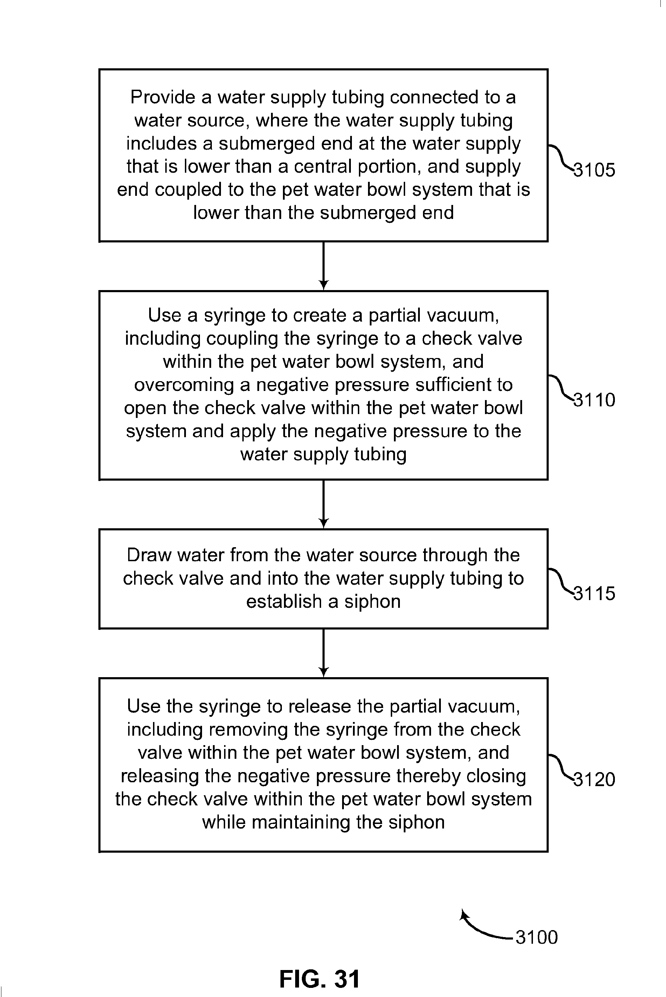

FIG. 31 shows an example of a method 3100 for operating the pet water bowl according to aspects of the present disclosure. Generally, these operations are performed according to the methods and processes described in accordance with aspects of the present disclosure. In some cases, the operations described herein are composed of various substeps, or are performed in conjunction with other operations.

At operation 3105, the system provides a water supply tubing connected to a water source, where the water supply tubing includes a submerged end at the water supply that is lower than a central portion, and supply end coupled to the pet water bowl system that is lower than the submerged end. In some cases, the operations of this step refer to, or may be performed by, a pet water bowl system as described with reference to FIGs. 1-4, 7-10, 13-16, 18-21, and 22-23.

At operation 3110, the system uses a syringe to create a partial vacuum, including coupling the syringe to a check valve within the pet water bowl system, and overcoming a negative pressure sufficient to open the check valve within the pet water bowl system and apply the negative pressure to the water supply tubing. In some cases, the operations of this step refer to, or may be performed by, a syringe as described with reference to FIG. 6.

At operation 3115, the system draws water from the water source through the check valve and into the water supply tubing to establish a siphon. In some cases, the operations of this step refer to, or may be performed by, a check valve as described with reference to FIGs. 5, 19, and 20.

At operation 3120, the system uses the syringe to release the partial vacuum, including removing the syringe from the check valve within the pet water bowl system, and releasing the negative pressure thereby closing the check valve within the pet water bowl system while maintaining the siphon. In some cases, the operations of this step refer to, or may be performed by, a syringe as described with reference to FIG. 6.

Accordingly, a method for pet water bowl is described. One or more aspects of the method include providing a housing; connecting a valve assembly within the housing to a water supply line from outside the housing; operating a valve mechanism within the valve assembly to detect water within the housing and shut off the water supply when water is detected within the housing; and activating a mechanical indicator mechanism in response to the valve mechanism detecting water within the housing to indicate when the valve mechanism is in a closed position, wherein the mechanical indicator moves from a position within the housing to a position at least partially protruding from the housing when activated.

Some examples of the method and apparatus further include providing a keyway in the housing configured to receive a fastener head, wherein the fastener head extends from a vertical wall.

Some examples of the method and apparatus further include operating a ball valve mechanism within the valve assembly to manually control the flow of water. Some examples further include locking the housing in a closed position when the ball valve mechanism is in an open position allowing flow of water, and unlocking the housing to allow user access to components within the housing when the ball valve mechanism is in a closed position shutting off the flow of water.

Some examples of the method and apparatus further include installing a check valve mechanism within the valve assembly in a direction to overcome a prescribed pressure and allow flow from the water supply line to pass through the check valve mechanism when a suction is applied to the check valve mechanism, wherein the prescribed pressure is above a siphon pressure of the water supply line, and the check valve mechanism closes when the suction is not applied.

Some examples of the method and apparatus further include operating a float valve mechanism within the housing to control the flow of water based on a water level. Some examples further include lifting the float valve when the housing is opened, wherein the float valve mechanism closes when the housing is opened.

Some examples of the method and apparatus further include regulating a water level in an outer bowl using a float valve. Some examples further include nesting an inner bowl within the outer bowl, wherein the inner bowl comprises a check valve to prevent backflow of contaminants from the inner bowl into the outer bowl.

Additionally, a method for pet water bowl is described. One or more aspects of the method include providing a housing; connecting a valve assembly within the housing to a water supply line from outside the housing; operating a ball valve mechanism within the valve assembly to manually control the flow of water; and locking the housing in a closed position when the ball valve mechanism is in an open position allowing flow of water, and unlocking the housing to allow user access to components within the housing when the ball valve mechanism is in a closed position shutting off the flow of water.

Some examples of the method and apparatus further include providing a keyway in the housing configured to receive a fastener head, wherein the fastener head extends from a vertical wall.

Some examples of the method and apparatus further include activating a mechanical indicator mechanism in response to the valve mechanism detecting water within the housing to indicate when the valve mechanism is in a closed position, wherein the mechanical indicator moves from a position within the housing to a position at least partially protruding from the housing when activated.

Some examples of the method and apparatus further include operating a ball valve mechanism within the valve assembly to manually control the flow of water. Some examples further include locking the housing in a closed position when the ball valve mechanism is in an open position allowing flow of water, and unlocking the housing to allow user access to components within the housing when the ball valve mechanism is in a closed position shutting off the flow of water.

Some examples of the method and apparatus further include installing a check valve mechanism within the valve assembly in a direction to overcome a prescribed pressure and allow flow from the water supply line to pass through the check valve mechanism when a suction is applied to the check valve mechanism. In some aspects, the prescribed pressure is above a siphon pressure of the water supply line, and the check valve mechanism closes when the suction is not applied.

Some examples of the method and apparatus further include operating a float valve mechanism within the housing to control the flow of water based on a water level. Some examples further include lifting the float valve when the housing is opened, wherein the float valve mechanism closes when the housing is opened.

Some examples of the method and apparatus further include regulating a water level in an outer bowl using a float valve. Some examples further include nesting an inner bowl within the outer bowl, wherein the inner bowl comprises a check valve to prevent backflow of contaminants from the inner bowl into the outer bowl.

Some examples of the method and apparatus further include providing a first channel in the pet water bowl system, wherein the first channel is on a back of the pet water bowl system housing, and leads from a first side of the housing to an entry point on the back of the pet water bowl system housing. Some examples further include providing a second channel in the pet water bowl system, wherein the second channel is on the back of the pet water bowl system housing, and leads from a second side of the housing to an entry point on the back of the pet water bowl system housing. Some examples further include coupling a rotatable fitting to the pet water bowl housing, wherein the rotatable fitting is configured to align with the first channel and the second channel depending on where the rotatable fitting is rotated. Some examples further include connecting the housing to a water supply line via the rotatable fitting, wherein the first channel and the second channel are configured to contain the water supply line depending on where the rotatable fitting is rotated.

Some examples of the method and apparatus further include providing a flexible tube as the water supply line. Some examples further include coupling a water tank to the valve assembly via the water supply line.

In some aspects, the water supply line is configured to siphon water from the water tank to the valve assembly. In some aspects, the water tank is located higher than the valve assembly, and water is moved from the water tank into the valve assembly by gravity.

Some examples of the method and apparatus further include providing a flexible tube as the water supply line. Some examples further include coupling a pressurized water supply to the valve assembly via the water supply line.

Some examples of the method and apparatus further include providing a flexible tube as the water supply line. Some examples further include coupling a gravity-fed water supply to the valve assembly via the water supply line.

A method for pet water bowl is described. One or more aspects of the method include providing a valve assembly configured to be connected to a water supply line; operating a check valve mechanism within the valve assembly to overcome a prescribed pressure and allow flow from the water supply line to pass through the check valve mechanism when a suction is applied to the check valve mechanism; and closing the check valve mechanism when the suction is not applied.

Some examples of the method and apparatus further include providing a housing with a keyway configured to receive a fastener head, wherein the fastener head extends from a vertical wall.

Some examples of the method and apparatus further include operating a valve mechanism within the valve assembly to detect water within a housing and shut off the water supply when water is detected within the housing. Some examples further include activating a mechanical indicator mechanism in response to the valve mechanism detecting water within the housing to indicate when the valve mechanism is in a closed position, wherein the mechanical indicator moves from a position within the housing to a position at least partially protruding from the housing when activated.

Some examples of the method and apparatus further include operating a ball valve mechanism within the valve assembly to manually control the flow of water. Some examples further include locking a housing in a closed position when the ball valve mechanism is in an open position allowing flow of water, and unlocking the housing to allow user access to components within the housing when the ball valve mechanism is in a closed position shutting off the flow of water.

Some examples of the method and apparatus further include operating a float valve mechanism within a housing to control the flow of water based on a water level. Some examples further include lifting the float valve when the housing is opened, wherein the float valve mechanism closes when the housing is opened.

Some examples of the method and apparatus further include regulating a water level in an outer bowl using a float valve. Some examples further include nesting an inner bowl within the outer bowl, wherein the inner bowl comprises a check valve to prevent backflow of contaminants from the inner bowl into the outer bowl.

Some examples of the method and apparatus further include providing a first channel in the pet water bowl system, wherein the first channel is on a back of a pet water bowl system housing, and leads from a first side of the housing to an entry point on the back of the pet water bowl system housing. Some examples further include providing a second channel in the pet water bowl system, wherein the second channel is on the back of the pet water bowl system housing, and leads from a second side of the housing to an entry point on the back of the pet water bowl system housing. Some examples further include coupling a rotatable fitting to the pet water bowl housing, wherein the rotatable fitting is configured to align with the first channel and the second channel depending on where the rotatable fitting is rotated. Some examples further include connecting the housing to a water supply line via the rotatable fitting, wherein the first channel and the second channel are configured to contain the water supply line depending on where the rotatable fitting is rotated.

Some examples of the method and apparatus further include providing a flexible tube as the water supply line. Some examples further include coupling a water tank to the valve assembly via the water supply line.

In some aspects, the water supply line is configured to siphon water from the water tank to the valve assembly. In some aspects, the water tank is located higher than the valve assembly, and water is moved from the water tank into the valve assembly by gravity.

Some examples of the method and apparatus further include providing a flexible tube as the water supply line. Some examples further include coupling a pressurized water supply to the valve assembly via the water supply line.

Some examples of the method and apparatus further include providing a flexible tube as the water supply line. Some examples further include coupling a gravity-fed water supply to the valve assembly via the water supply line.

A method for pet water bowl is described. One or more aspects of the method include providing a housing configured to be connected to a water supply line; operating a float valve mechanism within the housing to control the flow of water based on a water level; and lifting the float valve using a sealing mechanism when the housing is opened, wherein the float valve mechanism closes when the housing is opened.

Some examples of the method and apparatus further include providing a keyway in the housing configured to receive a fastener head, wherein the fastener head extends from a vertical wall.

Some examples of the method and apparatus further include operating a valve mechanism within a valve assembly to detect water within the housing and shut off the water supply when water is detected within the housing. Some examples further include activating a mechanical indicator mechanism in response to the valve mechanism detecting water within the housing to indicate when the valve mechanism is in a closed position, wherein the mechanical indicator moves from a position within the housing to a position at least partially protruding from the housing when activated.

Some examples of the method and apparatus further include operating a ball valve mechanism within a valve assembly to manually control the flow of water. Some examples further include locking the housing in a closed position when the ball valve mechanism is in an open position allowing flow of water, and unlocking the housing to allow user access to components within the housing when the ball valve mechanism is in a closed position shutting off the flow of water.

Some examples of the method and apparatus further include installing a check valve mechanism within a valve assembly in a direction to overcome a prescribed pressure and allow flow from the water supply line to pass through the check valve mechanism when a suction is applied to the check valve mechanism, wherein the prescribed pressure is above a siphon pressure of the water supply line, and the check valve mechanism closes when the suction is not applied.

Some examples of the method and apparatus further include regulating the water level in an outer bowl using a float valve. Some examples further include nesting an inner bowl within the outer bowl, wherein the inner bowl comprises a check valve to prevent backflow of contaminants from the inner bowl into the outer bowl.

Some examples of the method and apparatus further include providing a first channel in the pet water bowl system, wherein the first channel is on a back of the pet water bowl system housing, and leads from a first side of the housing to an entry point on the back of the pet water bowl system housing. Some examples further include providing a second channel in the pet water bowl system, wherein the second channel is on the back of the pet water bowl system housing, and leads from a second side of the housing to an entry point on the back of the pet water bowl system housing. Some examples further include coupling a rotatable fitting to the pet water bowl housing, wherein the rotatable fitting is configured to align with the first channel and the second channel depending on where the rotatable fitting is rotated. Some examples further include connecting the housing to a water supply line via the rotatable fitting, wherein the first channel and the second channel are configured to contain the water supply line depending on where the rotatable fitting is rotated.

Some examples of the method and apparatus further include providing a flexible tube as the water supply line. Some examples further include coupling a water tank to the float valve mechanism via the water supply line.

In some aspects, the water supply line is configured to siphon water from the water tank to the float valve mechanism. In some aspects, the water tank is located higher than the float valve mechanism, and water is moved from the water tank into the float valve mechanism by gravity.

Some examples of the method and apparatus further include providing a flexible tube as the water supply line. Some examples further include coupling a pressurized water supply to the float valve mechanism via the water supply line.

Some examples of the method and apparatus further include providing a flexible tube as the water supply line. Some examples further include coupling a gravity-fed water supply to the float valve mechanism via the water supply line.

A method for pet water bowl is described. One or more aspects of the method include providing an outer bowl for holding water, wherein a water level in the outer bowl is regulated by a float valve and nesting an inner bowl within the outer bowl, wherein the inner bowl comprises a check valve to prevent backflow of contaminants from the inner bowl into the outer bowl.

Some examples of the method and apparatus further include providing a housing with a keyway configured to receive a fastener head, wherein the fastener head extends from a vertical wall.

Some examples of the method and apparatus further include operating a valve mechanism within a valve assembly to detect water within a housing and shut off a water supply when water is detected within the housing. Some examples further include activating a mechanical indicator mechanism in response to the valve mechanism detecting water within the housing to indicate when the valve mechanism is in a closed position, wherein the mechanical indicator moves from a position within the housing to a position at least partially protruding from the housing when activated.

Some examples of the method and apparatus further include operating a ball valve mechanism within a valve assembly to manually control the flow of water. Some examples further include locking a housing in a closed position when the ball valve mechanism is in an open position allowing flow of water, and unlocking the housing to allow user access to components within the housing when the ball valve mechanism is in a closed position shutting off the flow of water.

Some examples of the method and apparatus further include installing a check valve mechanism within a valve assembly in a direction to overcome a prescribed pressure and allow flow from a water supply line to pass through the check valve mechanism when a suction is applied to the check valve mechanism, wherein the prescribed pressure is above a siphon pressure of the water supply line, and the check valve mechanism closes when the suction is not applied.

Some examples of the method and apparatus further include operating a float valve mechanism within a housing to control the flow of water based on a water level. Some examples further include lifting the float valve when the housing is opened, wherein the float valve mechanism closes when the housing is opened.

Some examples of the method and apparatus further include providing a first channel in the pet water bowl system, wherein the first channel is on a back of a pet water bowl system housing, and leads from a first side of the housing to an entry point on the back of the pet water bowl system housing. Some examples further include providing a second channel in the pet water bowl system, wherein the second channel is on the back of the pet water bowl system housing, and leads from a second side of the housing to an entry point on the back of the pet water bowl system housing. Some examples further include coupling a rotatable fitting to the pet water bowl housing, wherein the rotatable fitting is configured to align with the first channel and the second channel depending on where the rotatable fitting is rotated. Some examples further include connecting the housing to a water supply line via the rotatable fitting, wherein the first channel and the second channel are configured to contain the water supply line depending on where the rotatable fitting is rotated.

Some examples of the method and apparatus further include providing a flexible tube as a water supply line. Some examples further include coupling a water tank to a valve assembly via the water supply line.

In some aspects, the water supply line is configured to siphon water from the water tank to the valve assembly. In some aspects, the water tank is located higher than the valve assembly, and water is moved from the water tank into the valve assembly by gravity.

Some examples of the method and apparatus further include providing a flexible tube as a water supply line. Some examples further include coupling a pressurized water supply to a valve assembly via the water supply line.

Some examples of the method and apparatus further include providing a flexible tube as a water supply line. Some examples further include coupling a gravity-fed water supply to a valve assembly via the water supply line.

A method for pet water bowl is described. One or more aspects of the method include providing a housing with a first channel and a second channel, wherein the first channel is on a back of the pet water bowl system housing and leads from a first side of the housing to an entry point on the back of the pet water bowl system housing, and the second channel is on the back of the pet water bowl system housing and leads from a second side of the housing to an entry point on the back of the pet water bowl system housing; coupling a rotatable fitting to the pet water bowl housing, wherein the rotatable fitting is configured to align with the first channel and the second channel depending on where the rotatable fitting is rotated; and connecting the housing to a water supply line via the rotatable fitting, wherein the first channel and the second channel are configured to contain the water supply line depending on where the rotatable fitting is rotated.

Some examples of the method and apparatus further include providing a keyway in the housing configured to receive a fastener head, wherein the fastener head extends from a vertical wall.

Some examples of the method and apparatus further include operating a valve mechanism within a valve assembly to detect water within the housing and shut off the water supply when water is detected within the housing. Some examples further include activating a mechanical indicator mechanism in response to the valve mechanism detecting water within the housing to indicate when the valve mechanism is in a closed position, wherein the mechanical indicator moves from a position within the housing to a position at least partially protruding from the housing when activated.

Some examples of the method and apparatus further include operating a ball valve mechanism within a valve assembly to manually control the flow of water. Some examples further include locking the housing in a closed position when the ball valve mechanism is in an open position allowing flow of water, and unlocking the housing to allow user access to components within the housing when the ball valve mechanism is in a closed position shutting off the flow of water.

Some examples of the method and apparatus further include installing a check valve mechanism within a valve assembly in a direction to overcome a prescribed pressure and allow flow from the water supply line to pass through the check valve mechanism when a suction is applied to the check valve mechanism. In some aspects, the prescribed pressure is above a siphon pressure of the water supply line, and the check valve mechanism closes when the suction is not applied.

Some examples of the method and apparatus further include operating a float valve mechanism within the housing to control the flow of water based on a water level. Some examples further include lifting the float valve when the housing is opened, wherein the float valve mechanism closes when the housing is opened.

Some examples of the method and apparatus further include regulating a water level in an outer bowl using a float valve. Some examples further include nesting an inner bowl within the outer bowl, wherein the inner bowl comprises a check valve to prevent backflow of contaminants from the inner bowl into the outer bowl.

Some examples of the method and apparatus further include providing a flexible tube as the water supply line. Some examples further include coupling a water tank to a valve assembly via the water supply line.

In some aspects, the water supply line is configured to siphon water from the water tank to the valve assembly.

In some aspects, the water tank is located higher than the valve assembly, and water is moved from the water tank into the valve assembly by gravity.

Some examples of the method and apparatus further include providing a flexible tube as the water supply line. Some examples further include coupling a pressurized water supply to a valve assembly via a water supply line.

Some examples of the method and apparatus further include providing a flexible tube as the water supply line. Some examples further include coupling a gravity-fed water supply to a valve assembly via the water supply line.

A method for pet water bowl is described. One or more aspects of the method include providing a water supply tubing connected to a water source, wherein the water supply tubing comprises a submerged end at the water supply that is lower than a central portion, and supply end coupled to the pet water bowl system that is lower than the submerged end; using a syringe to create a partial vacuum, comprising coupling the syringe to a check valve within the pet water bowl system, and overcoming a negative pressure sufficient to open the check valve within the pet water bowl system and apply the negative pressure to the water supply tubing; drawing water from the water source through the check valve and into the water supply tubing to establish a siphon; and using the syringe to release the partial vacuum, comprising removing the syringe from the check valve within the pet water bowl system, and releasing the negative pressure thereby closing the check valve within the pet water bowl system while maintaining the siphon.

In some aspects, the syringe is a Luer lock syringe. In some aspects, the syringe is manually operated. In some aspects, the check valve is a one-way valve. In some aspects, the check valve is installed so that the partial vacuum causes a reverse flow in the check valve. In some aspects, the check valve is spring-loaded to maintain closure until the negative pressure is applied.

In some aspects, the water supply tubing is made of flexible plastic material. In some aspects, the submerged end of the water supply tubing includes a filter to prevent debris from entering the tubing. In some aspects, the water source is a reservoir that is automatically replenished. In some aspects, the central portion of the water supply tubing is positioned above a water level in the pet water bowl system.

Additionally, a method for pet water bowl is described. One or more aspects of the method include providing a housing wherein the housing comprises a desired water level; connecting a valve assembly within the housing to a water supply line from outside the housing; operating a valve mechanism within the valve assembly to detect water within the housing and shut off the water supply when water is detected within the housing; and configuring the valve mechanism to detect water within the housing in excess of a prescribed excess amount above the desired water level.

Some examples of the method and apparatus further include providing a keyway in the housing configured to receive a fastener head, wherein the fastener head extends from a vertical wall.

Some examples of the method and apparatus further include activating a mechanical indicator mechanism in response to the valve mechanism detecting water within the housing to indicate when the valve mechanism is in a closed position, wherein the mechanical indicator moves from a position within the housing to a position at least partially protruding from the housing when activated.

Some examples of the method and apparatus further include operating a ball valve mechanism within the valve assembly to manually control the flow of water. Some examples further include locking the housing in a closed position when the ball valve mechanism is in an open position allowing flow of water, and unlocking the housing to allow user access to components within the housing when the ball valve mechanism is in a closed position shutting off the flow of water.

Some examples of the method and apparatus further include installing a check valve mechanism within the valve assembly in a direction to overcome a prescribed pressure and allow flow from the water supply line to pass through the check valve mechanism when a suction is applied to the check valve mechanism, wherein the prescribed pressure is above a siphon pressure of the water supply line, and the check valve mechanism closes when the suction is not applied.

Some examples of the method and apparatus further include operating a float valve mechanism within the housing to control the flow of water based on a water level. Some examples further include lifting the float valve when the housing is opened, wherein the float valve mechanism closes when the housing is opened.

Some examples of the method and apparatus further include regulating the water level in an outer bowl using a float valve. Some examples further include nesting an inner bowl within the outer bowl, wherein the inner bowl comprises a check valve to prevent backflow of contaminants from the inner bowl into the outer bowl.

Some examples of the method and apparatus further include providing a first channel in the pet water bowl system, wherein the first channel is on a back of the pet water bowl system housing, and leads from a first side of the housing to an entry point on the back of the pet water bowl system housing. Some examples further include providing a second channel in the pet water bowl system, wherein the second channel is on the back of the pet water bowl system housing, and leads from a second side of the housing to an entry point on the back of the pet water bowl system housing. Some examples further include coupling a rotatable fitting to the pet water bowl housing, wherein the rotatable fitting is configured to align with the first channel and the second channel depending on where the rotatable fitting is rotated. Some examples further include connecting the housing to a water supply line via the rotatable fitting, wherein the first channel and the second channel are configured to contain the water supply line depending on where the rotatable fitting is rotated.

Some examples of the method and apparatus further include providing a flexible tube as the water supply line. Some examples further include coupling a water tank to the valve assembly via the water supply line.

In some aspects, the water supply line is configured to siphon water from the water tank to the valve assembly. In some aspects, the water tank is located higher than the valve assembly, and water is moved from the water tank into the valve assembly by gravity.

Some examples of the method and apparatus further include providing a flexible tube as the water supply line. Some examples further include coupling a pressurized water supply to the valve assembly via the water supply line.

Some examples of the method and apparatus further include providing a flexible tube as the water supply line. Some examples further include coupling a gravity-fed water supply to the valve assembly via the water supply line.

Some of the functional units described in this specification have been labeled as modules, or components, to more particularly emphasize their implementation independence.

While only a few embodiments of the disclosure have been shown and described, it will be obvious to those skilled in the art that many changes and modifications may be made thereunto without departing from the spirit and scope of the disclosure as described in the following claims.

In describing example embodiments, specific terminology is used for the sake of clarity. For purposes of description, each specific term is intended to at least include all technical and functional equivalents that operate in a similar manner to accomplish a similar purpose. Additionally, in some instances where a particular example embodiment includes system elements, device components or method steps, those elements, components or steps can be replaced with a single element, component or step. Likewise, a single element, component or step can be replaced with a plurality of elements, components or steps that serve the same purpose. Moreover, while example embodiments have been shown and described with references to particular embodiments thereof, those of ordinary skill in the art will understand that various substitutions and alterations in form and detail can be made therein without departing from the scope of the disclosure. Further still, other aspects, functions and advantages are also within the scope of the disclosure.

The methods and systems described herein may transform physical and/or intangible items from one state to another.

The elements described and depicted herein, including in flow charts and block diagrams throughout the figures, imply logical boundaries between the elements. While the foregoing drawings and descriptions set forth functional aspects of the disclosed systems, no particular arrangement for implementing these functional aspects should be inferred from these descriptions unless explicitly stated or otherwise clear from the context. Similarly, it will be appreciated that the various steps identified and described in the disclosure may be varied, and that the order of steps may be adapted to particular applications of the techniques disclosed herein. All such variations and modifications are intended to fall within the scope of this disclosure. As such, the depiction and/or description of an order for various steps should not be understood to require a particular order of execution for those steps, unless required by a particular application, or explicitly stated or otherwise clear from the context.

Example flowcharts are provided herein for illustrative purposes and are non-limiting examples of methods. One of ordinary skill in the art will recognize that example methods can include more or fewer steps than those illustrated in the example flowcharts, and that the steps in the example flowcharts can be performed in a different order than the order shown in the illustrative flowcharts.

While the disclosure has been disclosed in connection with the preferred embodiments shown and described in detail, various modifications and improvements thereon will become readily apparent to those skilled in the art. Accordingly, the spirit and scope of the disclosure is not to be limited by the foregoing examples, but is to be understood in the broadest sense allowable by law.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "with," "including," and "containing" are to be construed as open-ended terms (i.e., meaning "including, but not limited to,") unless otherwise noted. Recitations of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. The term "set" may include a set with a single member. No language in the specification should be construed as indicating any non-claimed element as essential to the practice of the disclosure.

While the foregoing written description enables one skilled to make and use what is considered presently to be the best mode thereof, those skilled in the art will understand and appreciate the existence of variations, combinations, and equivalents of the specific embodiment, method, and examples herein. The disclosure should therefore not be limited by the above-described embodiment, method, and examples, but by all embodiments and methods within the scope and spirit of the disclosure.

All patent applications and patents, both foreign and domestic, and all other publications references herein are incorporated herein in their entireties to the full extent permitted by law.

While the invention herein disclosed has been described by means of specific embodiments, examples and applications thereof, numerous modifications and variations could be made thereto by those skilled in the art without departing from the scope of the invention set forth in the claims.

## Claims

1. A leak stop valve system for a pet water bowl system of comprising:
- a housing wherein the housing comprises a desired water level;
- a valve assembly within the housing configured to be connected to a water supply line from outside the housing;
- a valve mechanism within the valve assembly, the valve mechanism being operable to detect water within the housing and to shut off the water supply when water is detected within the housing; and
- the valve mechanism wherein the valve mechanism is configured to detect water within the housing in excess of a prescribed excess amount above the desired water level.

2. The leak stop valve system for a pet water bowl system of claim 1 further comprising:
- a mechanical indicator mechanism configured to activate in response to the valve mechanism detecting water within the housing to indicate when the valve mechanism is in a closed position, wherein the mechanical indicator moves from a position within the housing to a position at least partially protruding from the housing when activated.

3. The leak stop valve system for a pet water bowl system of claim 1 further comprising:
- a ball valve mechanism within the valve assembly, the ball valve mechanism being manually operable to control flow of water; and
- an access mechanism configured to lock the housing in a closed position when the ball valve mechanism is in an open position allowing flow of water, and to unlock the housing and allow user access to components within the housing when the ball valve mechanism is in a closed position shutting off the flow of water.

4. The leak stop valve system for a pet water bowl system of claim 1 further comprising:
- a float valve mechanism within the housing, the float valve mechanism being operable to control flow of water based on a water level; and
- a sealing mechanism configured to lift the float valve when the housing is opened, wherein the float valve mechanism closes when the housing is opened.

5. The leak stop valve system for a pet water bowl system of claim 1 further comprising:
- an outer bowl for holding water, wherein a water level in the outer bowl is regulated by a float valve; and
- an inner bowl configured to nest within the outer bowl, the inner bowl comprising a check valve to prevent back flow of contaminants from the inner bowl into the outer bowl.

6. The leak stop valve system for a pet water bowl system of claim 1 further comprising:
- a first channel in the pet water bowl system, wherein the first channel is on a back of the pet water bowl system housing, wherein the first channel leads from a first side of the housing to an entry point on the back of the pet water bowl system housing;
- a second channel in the pet water bowl system, wherein the second channel is on the back of the pet water bowl system housing, wherein the first channel leads from a second side of the housing to an entry point on the back of the pet water bowl system housing; and
- a rotatable fitting coupled to the pet water bowl housing, wherein the rotatable fitting is configured to align with the first channel and the second channel depending on where the rotatable fitting is rotated;
- wherein the housing is configured to be connected to a water supply line via the rotatable fitting, wherein the first channel and the second channel are configured to contain the water supply line depending on where the rotatable fitting is rotated.

7. The leak stop valve system for a pet water bowl system of claim 1 further comprising:
- said water supply line comprising a flexible tube; and
- a water tank coupled to said valve assembly via said water supply line.

8. The pet water bowl system of Claim 7 wherein said water supply line is configured to siphon water from said water tank to said valve assembly.

9. A method for controlling water flow in a pet water bowl system, comprising:
- providing a housing wherein the housing comprises a desired water level;
- connecting a valve assembly within the housing to a water supply line from outside the housing;
- operating a valve mechanism within the valve assembly to detect water within the housing and shut off the water supply when water is detected within the housing; and
- configuring the valve mechanism to detect water within the housing in excess of a prescribed excess amount above the desired water level.

10. The method of claim 9, further comprising:
- activating a mechanical indicator mechanism in response to the valve mechanism detecting water within the housing to indicate when the valve mechanism is in a closed position, wherein the mechanical indicator moves from a position within the housing to a position at least partially protruding from the housing when activated.

11. The method of claim 9, further comprising:
- operating a ball valve mechanism within the valve assembly to manually control the flow of water; and
- locking the housing in a closed position when the ball valve mechanism is in an open position allowing flow of water, and unlocking the housing to allow user access to components within the housing when the ball valve mechanism is in a closed position shutting off the flow of water.

12. The method of claim 9, further comprising:
- operating a float valve mechanism within the housing to control the flow of water based on a water level; and
- lifting the float valve when the housing is opened, wherein the float valve mechanism closes when the housing is opened.

13. The method of claim 9, further comprising:
- regulating the water level in an outer bowl using a float valve; and
- nesting an inner bowl within the outer bowl, wherein the inner bowl comprises a check valve to prevent backflow of contaminants from the inner bowl into the outer bowl.

14. The method of claim 9, further comprising:
- providing a first channel in the pet water bowl system, wherein the first channel is on a back of the pet water bowl system housing, and leads from a first side of the housing to an entry point on the back of the pet water bowl system housing;
- providing a second channel in the pet water bowl system, wherein the second channel is on the back of the pet water bowl system housing, and leads from a second side of the housing to an entry point on the back of the pet water bowl system housing;
- coupling a rotatable fitting to the pet water bowl housing, wherein the rotatable fitting is configured to align with the first channel and the second channel depending on where the rotatable fitting is rotated; and
- connecting the housing to a water supply line via the rotatable fitting, wherein the first channel and the second channel are configured to contain the water supply line depending on where the rotatable fitting is rotated.

15. The method of claim 9, further comprising:
- providing a flexible tube as the water supply line; and
- coupling a water tank to the valve assembly via the water supply line.

16. The method of claim 15, wherein the water supply line is configured to siphon water from the water tank to the valve assembly.
